# EUROPÄISCHE PATENTSCHRIFT

(11) **EP 2 720 414 B1**
(45) Veröffentlichungstag und Bekanntmachung des Hinweises auf die Patenterteilung: **10.12.2014**
(21) Anmeldenummer: 12187995.1
(22) Anmeldetag: 10.10.2012
(51) Int. Cl.: H04L 12/40

(54) **Bussystem**
Bus system
Système de bus

(43) Veröffentlichungstag der Anmeldung: 16.04.2014
(73) Patentinhaber: SICK AG, 79183 Waldkirch/Breisgau (DE)
(72) Erfinder: Saumer, Markus, 77948 Friesenheim (DE)
(74) Vertreter: Manitz, Finsterwald & Partner GbR

(56) Entgegenhaltungen:
- EP-A1- 2 209 262
- US-A1- 2009 265 571
- US-A1- 2011 112 700

## Beschreibung

Die vorliegende Erfindung betrifft ein als Sicherheitssystem ausgebildetes Bussystem.

Bussysteme werden dazu genutzt, eine Vielzahl von Geräten durch eine gemeinsame Busleitung zu verbinden und eine Datenkommunikation oder eine Informationsübertragung zwischen den Geräten über die Busleitung zu ermöglichen. Beispielsweise stellen Feldbussysteme eine Möglichkeit bereit, um mehrere örtlich verteilte Geräte miteinander und ggf. mit einer zentralen Steuerung zu verbinden. Die an die Busleitung angeschlossenen Geräte stellen typischerweise Verbraucher elektrischer Leistung dar und müssen dementsprechend mit elektrischem Strom versorgt werden.

Es ist bekannt, mehrere an das Bussystem angeschlossene Verbraucher durch eine gemeinsame Stromversorgungseinheit mit Strom zu versorgen, die eine elektrische Spannung bereitstellt, wobei die Verbraucher über eine gemeinsame erste und zweite Stromversorgungsleitung mit der Stromversorgungseinheit verbunden sind, zwischen denen die elektrische Spannung bereitgestellt ist.

Außerdem können an einem Bussystem mehrere verteilte Stromversorgungseinheiten vorgesehen sein, um die Leitungslängen von den Verbrauchern zu der jeweils nächstgelegenen Stromversorgungseinheit und den dadurch bedingten Spannungsabfall zu verringern. Mehrere nebeneinander angeordnete und parallel geschaltete Stromversorgungseinheiten können dazu dienen, die in dem Bussystem verfügbare elektrische Leistung zu erhöhen.

Da der in den beschriebenen Bussystemen in einer Stromversorgungsleitung zu erwartende Stromfluss von dem Strombedarf aller Verbraucher in dem Bussystem abhängt, treten in einem solchen Bussystem erhebliche maximale Stromstärken und erhebliche örtliche und zeitliche Schwankungen des Stromflusses auf. Das Bussystem und insbesondere die Absicherung des Bussystems gegen gefährliche elektrische Überströme sind deshalb ebenfalls für erhebliche Stromstärken und Schwankungen des Stromflusses auszulegen, wodurch die elektrische Sicherheit des Bussystems beeinträchtigt wird bzw. der Aufwand für die Schaffung einer den Anforderungen an die elektrische Sicherheit genügenden elektrischen Absicherung erhöht wird.

Zugleich erweisen sich derartige Bussysteme als anfällig für Störungen, welche durch elektromagnetische Störeinflüsse hervorgerufen werden, d.h. sie weisen eine eingeschränkte elektromagnetische Verträglichkeit (EMV) auf, wodurch die bei dem Betrieb des Bussystems erreichbare Störsicherheit beeinträchtigt wird.

EP 2 209 262 A1 offenbart ein Bussystem mit einem Buskoppler zur Verbindung zumindest eines Leistung über eine Busleitung beziehenden Busteilnehmers für die Gebäudeautomation mit einer primären Busleitung, mit einer Trenneinrichtung zur galvanischen Entkopplung des Busteilnehmers von der primären Busleitung, wobei der Busteilnehmer über eine sekundäre Busleitung mit dem Buskoppler verbindbar ist. Der Buskoppler weist eine Spannungsversorgung zur Einspeisung einer Busspannung in die sekundäre Busleitung und eine Steuerungselektronik zur Steuerung der Spannungsversorgung und der Busspannung der sekundären Busleitung auf. Die Trenneinrichtung dient der galvanischen Entkopplung desjenigen Teils des Bussystems, das die Busteilnehmer umfasst, von der Primärbusleitung, an welche ein zentrale Steuerungseinrichtung, Master genannt, angeschlossen ist. Damit dient die Trenneinrichtung dazu, andere Teile des Bussystems, die aus Sicht einer Datenübertragung vom Master zum Busteilnehmer vor dem Buskoppler liegen, durch einen Störfall hinter dem Buskoppler nicht zu beeinflussen oder zu schädigen. Über die Trenneinrichtung erfolgt dabei eine reine Signalübertragung.

Aufgabe der Erfindung ist es, ein als Sicherheitssystem ausgebildetes Bussystem anzugeben, welches hohe elektrische Sicherheit und hohe Störsicherheit aufweist und welches mit geringem Aufwand bereitgestellt werden kann.

Diese Aufgabe wird durch ein Bussystem mit den Merkmalen des Anspruchs 1 gelöst.

Das erfindungsgemäße Bussystem ist als Sicherheitssystem ausgebildet und umfasst eine Busleitung, mehrere Verbraucher von elektrischer Leistung, die über die Busleitung miteinander verbunden sind, und mehrere separate elektrische Stromversorgungseinheiten, die jeweils eine elektrische Spannung zur Stromversorgung wenigstens eines Verbrauchers bereitstellen. Das Bussystem ist in Segmente mit jeweils einem oder mehreren Verbrauchern unterteilt, denen jeweils eine Stromversorgungseinheit zugeordnet ist und die jeweils eine erste Stromversorgungsleitung und eine zweite Stromversorgungsleitung aufweisen, über die die ein oder mehreren Verbraucher des jeweiligen Segments mit der zugeordneten Stromversorgungseinheit elektrisch leitfähig verbunden sind und zwischen denen die elektrische Spannung bereitgestellt ist. Auf der ersten Stromversorgungsleitung wird dabei eine auf ein Massepotential bezogene erste Spannung bereitgestellt und auf der zweiten Stromversorgungsleitung wird eine auf das Massepotential bezogene von der ersten Spannung verschiedene zweite Spannung bereitgestellt, wobei auf einer der beiden Stromversorgungsleitungen beispielsweise das Massepotential bereitgestellt werden kann, d.h. eine auf das Massepotential bezogene Spannung von 0 Volt. Die erste Stromversorgungsleitung und die zweite Stromversorgungsleitung eines Segments sind dabei jeweils nicht direkt mit der ersten Stromversorgungsleitung und der zweiten Stromversorgungsleitung eines anderen Segments elektrisch leitfähig verbunden und insbesondere von der ersten Stromversorgungsleitung und der zweiten Stromversorgungsleitung des anderen Segments galvanisch getrennt.

Durch diese Segmentierung des Bussystems in Bezug auf die Energieversorgung wird die elektrische Absicherung des Bussystems gegen gefährliche Überströme erheblich erleichtert und die elektrische Sicherheit des Bussystems erhöht. Aufgrund der nicht vorhandenen direkten elektrisch leitfähigen Verbindung zwischen den ersten und zweiten Stromversorgungsleitungen verschiedener Segmente des Bussystems bzw. der galvanischen Trennung zwischen diesen Stromversorgungsleitungen wird der Stromfluss in jedem Segment des Bussystems im Wesentlichen nur durch die in dem jeweiligen Segment angeordneten Verbraucher beeinflusst. Dadurch werden die in den ersten und zweiten Stromversorgungsleitungen zu erwartenden maximalen Stromstärken sowie die zu erwartenden Schwankungen der Stromstärke in diesen Stromversorgungsleitungen verringert. Eine elektrische Absicherung, welche die erforderliche Sicherheit gewährleistet, ist mit einfacheren Mitteln realisierbar, da diese nur für geringere maximale Stromstärken und geringere Schwankungen des Stromflusses ausgelegt sein muss. Bei der Konzipierung bzw. Implementierung des Bussystems können die verschiedenen Bussegmente im Hinblick auf die Energieversorgung und elektrische Absicherung unabhängig voneinander betrachtet werden, wobei bei der Planung der Energieversorgung und elektrischen Absicherung eines Segments nur die Verbraucher des jeweiligen Segments zu berücksichtigen sind. Die Projektierung bzw. Planung eines Bussystems mit einem die Anforderungen erfüllenden Energieversorgungskonzept und einer eine hohe Sicherheit aufweisenden elektrischen Absicherung gegen Überströme wird dadurch erheblich vereinfacht.

Durch die Aufteilung des Bussystems in verschiedene Segmente mit nicht direkt miteinander elektrisch leitfähig verbundenen und insbesondere galvanisch voneinander getrennten ersten und zweiten Stromversorgungsleitungen und die dadurch bedingte Verringerung bzw. Eliminierung von galvanischen Wechselwirkungen zwischen den Stromversorgungsleitungen getrennter Segmente wird ferner der Einfluss von elektromagnetischen Störeinflüssen auf den Betrieb des Bussystems verringert und die Störsicherheit des Bussystems erhöht.

Es wird somit ein flexibles Energieversorgungskonzept geschaffen, welches mit geringem Aufwand bereitgestellt werden kann und welches eine erhöhte elektrische Sicherheit und Störungsfreiheit bei dem Betrieb des Bussystems gewährleistet.

Darunter, dass die Stromversorgungsleitungen verschiedener Segmente nicht direkt miteinander elektrisch leitfähig verbunden sind, ist zu verstehen, dass die Stromversorgungsleitungen der unterschiedlichen Segmente voneinander getrennt, d.h. nicht als Teil einer einzigen Stromversorgungsleitung ausgebildet sind, zumindest jedoch nicht in niederohmigem elektrisch leitenden Kontakt miteinander stehen. Unter galvanischer Trennung ist zu verstehen, dass keinerlei galvanische, d.h. elektrisch leitfähige Verbindung bzw. Kopplung zwischen den Stromversorgungsleitungen vorhanden ist. Eine möglicherweise vorhandene galvanische Kopplung der Stromversorgungsleitungen miteinander über das übergeordnete Versorgungsnetz, mit dem die Stromversorgungseinheiten eingangsseitig zu ihrer eigenen Leistungs- und Stromversorgung, möglicherweise galvanisch, verbunden sind, wird dabei nicht notwendigerweise berücksichtigt, d.h. die galvanische Trennung bezieht sich auf das an das Versorgungsnetz angeschlossene Bussystem. Es kann aber auch zumindest eine Stromversorgungseinheit eingesetzt werden, die eine galvanische Trennung der Stromversorgungsleitungen von dem Stromversorgungsnetz gewährleistet, wie beispielsweise ein Netzteil mit einem Transformator, so dass auch eine derartige galvanische Kopplung vermieden und eine absolute galvanische Trennung der Stromversorgungsleitungen gewährleistet werden kann.

Eines oder mehrere Segmente des Systems können im Rahmen der Erfindung prinzipiell durch jeweils genau einen Verbraucher gebildet sein. Vorzugsweise umfasst das System allerdings ein oder mehrere Segmente, die jeweils zumindest zwei Verbraucher umfassen. Durch die Versorgung mehrerer Verbraucher mit einer gemeinsamen Stromversorgungseinheit wird ein verringerter für die Stromversorgung erforderlicher Material- und Verkabelungsaufwand gewährleistet. Gleichzeitig wird durch die Trennung der Stromversorgungsleitungen eine Verschlechterung der elektrischen Sicherheit oder der Störungsfreiheit bei dem Betrieb des Bussystems verhindert, so dass insgesamt ein sicheres und zuverlässiges und zugleich einfach zu realisierendes Bussystem geschaffen wird.

Die Stromversorgungseinheit eines Segments und ein Verbraucher des zugehörigen Segments können in einem gemeinsamen Gerät integriert sein. Die Stromversorgungseinheit und die Verbraucher des Segments können aber ebenso als getrennte Geräte realisiert sein, die über die jeweiligen Stromversorgungsleitungen miteinander verbunden sind.

Vorteilhafte Ausführungsformen der Erfindung sind in den Unteransprüchen, der Beschreibung und den Figuren beschrieben.

Vorzugsweise umfasst das Bussystem wenigstens einen zumindest abschnittsweise in der Busleitung angeordneten Bussignalpfad, über den die Verbraucher miteinander verbunden sind und über den Bussignale zwischen den Verbrauchern übertragen werden, die mit dem Bussystem übermittelte Informationen repräsentieren. Jedes Segment umfasst dabei vorzugsweise einen oder mehrere als elektrische Verbraucher ausgebildete Teilnehmer des Bussystems, die an der Informationsübertragung über das Bussystem teilnehmen. Die Teilnehmer sind mit dem Bussignalpfad bevorzugt elektrisch leitfähig verbunden, um die über den Bussignalpfad übertragenen Signale zu beeinflussen und dadurch eine von dem jeweiligen Teilnehmer erzeugte Information über den Bussignalpfad zu übertragen oder um die die über den Bussignalpfad übertragenen Signale zu empfangen und die enthaltenen Informationen auszuwerten.

Das Bussystem kann auch mehrere derartige Bussignalpfade umfassen, die zur Übertragung voneinander verschiedener Bussignale bzw. verschiedener Informationen dienen können.

Der wenigstens eine Bussignalpfad weist bevorzugt mehrere Abschnitte auf, die durch eine Kopplungseinheit nicht-galvanisch und signalübertragend miteinander gekoppelt sind. Die Kopplungseinheit ist dazu eingerichtet, eine optische, induktive und/oder kapazitive Signalübertragung zwischen wenigstens zwei und insbesondere genau zwei Abschnitten des Bussignalpfads durchzuführen, wobei die Signale von der Kopplungseinheit vorzugsweise im Wesentlichen unverändert von einem Abschnitt des Bussignalpfads zu einem anderen Abschnitt des Bussignalpfads übertragen werden. Durch eine wie vorstehend beschriebene nicht-galvanische Kopplung kann in vorteilhafter Weise eine signal- und informationsübertragende Verbindung zwischen verschiedenen Abschnitten eines Bussignalpfads erreicht werden, ohne dass die beiden Abschnitte elektrisch leitfähig miteinander verbunden sind. Durch eine solche Kopplungseinheit kann eine permanente Signalübertragung erfolgen. Der jeweilige nicht-galvanische Signalübertragungsweg der Kopplungseinheit ist vorzugsweise nicht von außen unterbrechbar ist. Die Kopplungseinheit kann beispielsweise in einem Gehäuse angeordnet und durch das Gehäuse vor die Übertragung störenden Einflüssen von außen geschützt sein.

Das Bussystem umfasst vorzugsweise mehrere Kopplungseinheiten, die jeweils in der vorstehend beschriebenen Weise zur nicht-galvanischen signalübertragenden Kopplung zweier Abschnitte eines jeweiligen Bussignalpfads eingerichtet sind. Verschiedene Kopplungseinheiten können dabei demselben Bussignalpfad zugeordnet sein, wobei die Kopplungseinheiten an verschiedenen Stellen des Bussignalpfads angeordnet sind. Ebenso können verschiedene Kopplungseinheiten verschiedenen Bussignalpfaden des Bussystems zugeordnet sein und jeweils zwei Abschnitte des jeweils zugeordneten Bussignalpfads nicht-galvanisch miteinander koppeln.

Die mehreren, über eine wie vorstehend beschriebene Kopplungseinheit nicht-galvanisch, aber signalübertragend miteinander gekoppelten Abschnitte eines Bussignalpfads sind vorzugsweise auch sonst galvanisch voneinander getrennt. Aufgrund der signalübertragenden Kopplung über die Kopplungseinheit bildet der die galvanisch getrennten Abschnitte umfassende Bussignalpfad dennoch einen durchgehenden Signalübertragungspfad zur Übertragung der Bussignale. Bei einem linienförmigen Bussignalpfad kann es zur galvanischen Trennung der Abschnitte des Bussignalpfads ausreichen, wenn eine Kopplungseinheit vorhanden ist, die den linienförmigen Bussignalpfad in zwei galvanisch getrennte Linienabschnitte unterteilt. Im Falle eines ringförmigen Bussignalpfads sind vorzugsweise zumindest zwei an unterschiedlichen Stellen des ringförmigen Bussignalpfads angeordnete Kopplungseinheiten vorgesehen, die den ringförmigen Bussignalpfad in wenigstens zwei galvanisch getrennte Ringabschnitte unterteilen.

Durch die galvanische Trennung der Abschnitte des Bussignalpfads voneinander kann die Empfindlichkeit des Bussystems gegen elektromagnetische Störeinflüsse noch weiter verringert werden, da galvanische Wechselwirkungen zwischen den getrennten Abschnitten des Bussignalpfads vermieden werden. Das Bussystem weist folglich eine hohe Störsicherheit und elektromagnetische Verträglichkeit (EMV) auf.

Das Bussystem kann auch mehrere Bussignalpfade umfassen, die jeweils mehrere Abschnitte aufweisen, die in der vorstehend beschriebenen Weise durch eine oder mehrere Kopplungseinheiten signalübertragend und nicht-galvanisch miteinander verbunden sind und vorzugsweise galvanisch voneinander getrennt sind.

Eine Kopplungseinheit kann zwischen den beiden Bussignalpfadabschnitten grundsätzlich eine Signalübertragung in eine Richtung oder in beide Richtungen gewährleisten. Einem Abschnitt des Bussignalpfads ist dabei vorzugsweise eine Sendeeinheit der Kopplungseinheit zugeordnet, die mit einem Abschnitt des Bussignalpfads verbunden ist, um die auf dem Abschnitt des Bussignalpfads anliegenden Signale an den anderen Abschnitt zu senden. Dem anderen Abschnitt des Bussignalpfads ist vorzugsweise eine Empfangseinheit der Kopplungseinheit zugeordnet, die mit dem Abschnitt des Bussignalpfads elektrisch leitfähig verbunden ist und dazu eingerichtet ist, die von der Sendeeinheit gesendeten Signale zu empfangen und an den zugeordneten Abschnitt des Bussignalpfads auszugeben. Ebenso kann, beispielsweise um eine Signalübertragung in beiden Richtungen zu ermöglichen, die Kopplungseinheit auch für jeden Abschnitt des Bussignalpfads sowohl eine mit dem jeweiligen Abschnitt verbundene und diesem zugeordnete Sendeeinheit als auch eine mit dem Abschnitt verbundene und diesem zugeordnete Empfangseinheit oder eine mit dem jeweiligen Abschnitt verbundene und diesem zugeordnete kombinierte Sende- und Empfangseinheit aufweisen.

Die Kopplungseinheit wird vorzugsweise über die erste und/oder zweite Stromversorgungsleitung eines Segments oder die ersten und/oder zweiten Stromversorgungsleitungen mehrerer verschiedener Segmente mit Strom versorgt, um die nicht-galvanische signalübertragende Kopplung der Abschnitte der Bussignalpfade zu gewährleisten. Dabei kann eine galvanische Trennung zwischen den ersten und zweiten Stromversorgungsleitungen verschiedener Segmente erhalten bleiben. Bevorzugt wird dabei eine Sendeeinheit, eine Empfangseinheit oder eine kombinierte Sende- und Empfangseinheit, die einem Abschnitt des Bussignalpfads zugeordnet ist, von der Stromversorgungseinheit desjenigen Segments mit Strom versorgt, dem der jeweilige Abschnitt des Bussignalpfads zugeordnet ist, wobei der Abschnitt des Bussignalpfads vorzugsweise mit einem oder mehreren und insbesondere allen Verbrauchern des zugeordneten Segments elektrisch leitfähig verbunden ist. Dadurch lässt sich in vorteilhafter Weise eine galvanische Trennung zwischen den Abschnitten der Bussignalpfade und den Stromversorgungsleitungen im Bereich einer Kopplungseinheit realisieren.

Eine Kopplungseinheit kann zur Durchführung der nicht-galvanischen Signalübertragung beispielsweise ein induktiv gekoppeltes Sender- und Empfängerpaar, insbesondere ein Spulenpaar, ein kapazitiv gekoppeltes Sender- und Empfängerpaar oder ein optisch gekoppeltes Sender- und Empfängerpaar wie z.B. einen Optokoppler umfassen, wobei anstelle reiner Sender und reiner Empfänger auch jeweils kombinierte Sender und Empfänger verwendet werden können.

Prinzipiell ist es bevorzugt, wenn zwei über eine Kopplungseinheit nicht-galvanisch miteinander gekoppelte und vorzugsweise galvanisch voneinander getrennte Abschnitte des wenigstens einen Bussignalpfads unterschiedlichen Segmenten des Bussystems zugeordnet sind und mit einem oder mehreren und bevorzugt allen Verbrauchern des jeweils zugeordneten Segments, vorzugsweise elektrisch leitfähig, verbunden sind. Die mit dem Abschnitt des Bussignalpfads elektrisch leitfähig verbundenen ein oder mehreren Verbraucher stellen vorzugsweise Teilnehmer des Bussystems dar, die die über den Bussignalpfad übertragenen Signale beeinflussen und dadurch von dem jeweiligen Teilnehmer erzeugte Informationen über den Bussignalpfad übertragen und/oder die über den Bussignalpfad übertragene Informationen empfangen und auswerten.

Das Bussystem ist bevorzugt in mehrere Segmente mit jeweils einem oder mehreren Verbrauchern unterteilt, wobei jedem Segment neben einer ersten und einer zweiten Stromversorgungsleitung einer von mehreren galvanisch voneinander getrennten Abschnitten zumindest eines Bussignalpfads zugeordnet ist, wobei jeder Abschnitt des Bussignalpfads wie vorstehend beschrieben vorzugsweise mit einem oder mehreren und insbesondere allen Verbrauchern des zugeordneten Segments elektrisch leitfähig verbunden ist. Bevorzugt sind sowohl die erste und zweite Stromversorgungsleitung als auch der wenigstens eine Bussignalpfadabschnitt eines Segments von der ersten und zweiten Stromversorgungsleitung und von dem wenigstens einen Bussignalpfadabschnitt eines anderen Segments galvanisch getrennt. Somit kann eine vollständige galvanische Trennung mehrerer Segmente, d.h. eine galvanische Trennung sowohl der den verschiedenen Segmenten zugeordneten Stromversorgungsleitungen als auch Bussignalpfadabschnitte, voneinander erreicht werden, wodurch die Störsicherheit des Systems noch weiter erhöht und die Planung und Implementierung des Bussystems noch weiter vereinfacht wird. Das Bussystem kann zwei oder mehr als zwei Segmente mit jeweils einem oder mehreren Verbrauchern umfassen, die in der vorstehend beschriebenen Weise vollständig voneinander getrennt sind.

Die Busleitung des Bussystems umfasst vorzugsweise mehrere Buskabel, wobei ein Buskabel bevorzugt jeweils an zwei Verbraucher des Bussystems angeschlossen und mit diesen verbunden ist. Die Verbraucher und die Buskabel können dabei beispielsweise eine Ringtopologie oder eine Linientopologie bilden.

Die erste und zweite Stromversorgungsleitung eines Segments sind vorzugsweise zumindest abschnittsweise als voneinander getrennte bzw. isolierte, elektrisch leitfähige Adern in einem gemeinsamen Kabel angeordnet. Dadurch wird der zur Bereitstellung des Bussystems erforderliche Verkabelungsaufwand reduziert.

Die erste und/oder zweite Stromversorgungsleitung zumindest eines Segments können zumindest abschnittsweise in der Busleitung angeordnet sein. Vorzugsweise sind die erste und/oder zweite Stromversorgungsleitung des Segments zumindest abschnittsweise zusammen mit einem Abschnitt eines Bussignalpfads des Bussystems in einem gemeinsamen Buskabel angeordnet, in dem die erste und/oder zweite Stromversorgungsleitung und der Bussignalpfad z.B. als voneinander getrennte bzw. isolierte elektrisch leitfähige Adern realisiert sind. Dadurch wird der für die Herstellung des Bussystems notwendige Verkabelungsaufwand noch weiter reduziert.

Die Adern des Buskabels können dabei vorzugsweise an einem gemeinsamen Steckverbindungselement des Buskabels, d.h. einem Steckverbinder oder einer Steckerbuchse, angeschlossen sein. Das Buskabel kann auch die Abschnitte mehrerer verschiedener Bussignalpfade oder verschiedene Abschnitte desselben Bussignalpfads enthalten, die vorzugsweise als voneinander isolierte Adern des Buskabels ausgebildet sind.

Gemäß einer vorteilhaften Ausführungsform sind wenigstens zwei und vorzugsweise alle Verbraucher eines Segments ausgehend von der dem Segment zugeordneten Stromversorgungseinheit über die erste und/oder zweite Stromversorgungsleitung des Segments in einer Reihe hintereinander an die dem Segment zugeordnete Stromversorgungseinheit angeschlossen. Die Einspeisung des Stroms erfolgt bei dieser Ausgestaltung somit an dem Anfang bzw. an einem anfangsseitigen Ende einer durch mehrere und insbesondere alle Verbraucher des Segments gebildeten Linie, entlang der die Verbraucher über die erste und/oder zweite Stromversorgungsleitung an die Stromversorgungseinheit angeschlossen sind. Vorzugsweise ist das Segment über den auf diese Weise gebildeten Segmentanfang und ein an dem Segmentanfang angeschlossenes Buskabel mit einem weiteren Segment verbunden.

Wenn die Stromversorgungseinheit an dem Anfang bzw. anfangsseitigen Ende einer solchen Linie angeordnet ist, lässt sich der Aufwand für die Implementierung des Bussystems reduzieren. Die Einspeisung des Stroms in das Segment kann dann über einen an dem Ende der Linie angeordneten Verbraucher bzw. ein dort angeordnetes Einspeisemodul erfolgen. Insbesondere wenn mehrere solche linienförmigen Segmente an ihren Enden, vorzugsweise über die Busleitung, miteinander verbunden und dadurch hintereinander geschaltet werden, kann in vorteilhafter Weise derselbe Verbraucher bzw. dasselbe Einspeisemodul, über das die Einspeisung in das Segment erfolgt, auch zur galvanischen Trennung der Stromversorgungsleitungen beider Segmente erfolgen, beispielsweise indem der Verbraucher bzw. das Einspeisemodul Anschlüsse bzw. Steckverbindungselemente für die erste und/oder zweite Stromversorgungsleitung beider Segmente aufweist, die in dem Verbraucher bzw. Einspeisemodul galvanisch voneinander getrennt sind. Es ist somit nur ein speziell angepasster Verbraucher bzw. ein speziell angepasstes Einspeisemodul notwendig, um sowohl die Stromeinspeisung in ein Segment als auch die galvanische Trennung zwischen zwei benachbarten Segmenten zu realisieren, wodurch der für die Implementierung des Bussystems erforderliche Aufwand reduziert wird.

Vorzugsweise enthält das Bussystem mehrere Segmente, deren Verbraucher jeweils in Bezug auf ihre Anordnung an der Busleitung in einer Linie hintereinander angeordnet sind, wobei der Anfang bzw. das anfangsseitige Ende eines Segments über die Busleitung mit einem Ende des benachbarten Segments verbunden ist. Die für die galvanische Trennung zwischen den Stromversorgungsleitungen der Segmente erforderlichen Vorkehrungen können dabei, wie vorstehend beschrieben, an demselben anfangsseitigen Ende eines Segments angeordnet sein, an dem auch die Stromeinspeisung in dieses Segment und die Verbindung des Segments mit dem benachbarten Segment über die Busleitung erfolgen, wodurch der für die Implementierung des Bussystems und insbesondere für die Stromeinspeisung und die Herstellung der galvanischen Trennung der Segmente erforderliche Aufwand verringert wird.

Bevorzugt umfasst das Bussystem wenigstens ein Einspeisemodul, das einem Segment des Bussystems zugeordnet ist und über das die zugeordnete Stromversorgungseinheit zur Bereitstellung der elektrischen Spannung mit dem Segment und insbesondere mit einem oder mehreren mit dem Einspeisemodul verbundenen Verbrauchern dieses Segments des Bussystems verbunden ist. Das Einspeisemodul stellt dabei vorzugsweise selbst einen Verbraucher des Segments dar, der insbesondere an die Busleitung des Bussystems angeschlossen ist. Das Einspeisemodul kann prinzipiell den einzigen Verbraucher eines genau einen Verbraucher aufweisenden Segments darstellen. Vorzugsweise umfasst das Segment aber zusätzlich zu dem Einspeisemodul ein oder mehrere weitere Verbraucher, die wie vorstehend beschrieben über das Einspeisemodul mit der Stromversorgungseinheit verbunden sind.

Vorzugsweise sind alle Verbraucher des jeweiligen Segments über das Einspeisemodul mit der Stromversorgungseinheit verbunden. Das Einspeisemodul und die übrigen Verbraucher des Segments können dabei in Bezug auf ihre Anbindung an die erste und/oder zweite Stromversorgungsleitung wie vorstehend beschrieben ausgehend von der Stromversorgungseinheit in einer Linie hintereinander angeordnet sein, wobei sich das Einspeisemodul an dem der Stromversorgungseinheit zugewandten anfangsseitigen Ende dieser Linie befinden kann.

Gemäß einer vorteilhaften Ausführungsform ist das Einspeisemodul sowohl mit der ersten und der zweiten Stromversorgungsleitung des dem Einspeisemodul zugeordneten Segments des Bussystems als auch mit der ersten und/oder der zweiten Stromversorgungsleitung eines benachbarten Segments des Bussystems verbunden. Die Stromversorgungsleitungen der Segmente können dabei in dem Einspeisemodul galvanisch voneinander getrennt sein. Dadurch, dass das Einspeisemodul auch mit der ersten und/oder zweiten Stromversorgungsleitung des benachbarten Segments verbunden ist, wird eine vereinfachte Einbindung des Einspeisemoduls in das Bussystem und dadurch eine vereinfachte Verkabelung des Bussystems erreicht. So kann das Einspeisemodul mit dem benachbarten Segment über ein Buskabel verbunden sein, welches neben zumindest einer Ader, die einen Abschnitt eines Bussignalpfads des Bussystems bildet, zusätzlich jeweils eine Ader für die erste und/oder zweite Stromversorgungsleitung des benachbarten Segments enthält. Somit ist für die Verbindung zwischen dem Einspeisemodul und dem benachbarten Segment des Bussystems über die Busleitung kein spezielles Kabel notwendig, welches sich von den übrigen, in dem Bussystem zur Verbindung zweier Verbraucher vorzugsweise eingesetzten Buskabeln unterscheiden muss, da das Kabel auch die Adern für die erste und/oder zweite Stromversorgungsleitung enthalten kann. Dadurch wir die Implementierung des Bussystems erleichtert. Gleichzeitig wird durch das Einspeisemodul zuverlässig eine galvanische Trennung zwischen den Stromversorgungsleitungen der zueinander benachbarten Segmente sichergestellt. Wenn das Einspeisemodul wie nachstehend beschrieben wenigstens eine Kopplungseinheit umfasst, kann die erste und/oder zweite Stromversorgungsleitung des benachbarten Segments außerdem zur Stromversorgung einer Sendeeinheit, einer Empfangseinheit oder einer kombinierten Sende- und Empfangseinheit der wenigstens einen Kopplungseinheit dienen, wobei die galvanische Trennung zwischen den Stromversorgungsleitungen der Segmente aufrecht erhalten bleiben kann. Die dem benachbarten Segment zugeordnete Stromversorgungseinheit versorgt dabei vorzugsweise eine Sende- und/oder Empfangseinheit, die mit einem dem benachbarten Segment zugeordneten Abschnitt eines Bussignalpfads elektrisch leitfähig verbunden ist.

Das Einspeisemodul kann beispielsweise ein erstes Steckverbindungselement, d.h. einen Steckverbinder oder eine Steckerbuchse, umfassen, an das ein Buskabel angeschlossen ist, welches das Einspeisemodul mit den übrigen Verbrauchern des dem Einspeisemodul zugeordneten Segments verbindet, wobei das Steckverbindungselement vorzugsweise jeweils einen Anschluss für eine Ader der ersten und/oder zweiten Stromversorgungsleitung des zugeordneten Segments und wenigstens einen Anschluss für eine Ader eines diesem Segment zugeordneten Abschnitts des Bussignalpfads aufweist. Das Einspeisemodul kann außerdem ein zweites derartiges Steckverbindungselement umfassen, welches das Einspeisemodul mit den ein oder mehreren Verbrauchern des benachbarten Segments verbindet und welches vorzugsweise jeweils einen Anschluss für eine Ader der ersten und/oder zweiten Stromversorgungsleitung des benachbarten Segments und wenigstens einen Anschluss für eine Ader eines dem benachbarten Segment zugeordneten Abschnitts des Bussignalpfads aufweist. Zusätzlich umfasst das Einspeisemodul vorzugsweise ein drittes Steckverbindungselement zum Anschluss eines Kabels, insbesondere eines Stromversorgungskabels, über welches das Einspeisemodul mit der zugeordneten Stromversorgungseinheit verbunden ist und in welchem die das Einspeisemodul mit der zugeordneten Stromversorgungseinheit verbindenden Abschnitte der ersten und/oder zweiten Stromversorgungsleitung angeordnet sind, wobei diese Abschnitte als getrennte Adern des Kabels ausgebildet sein können.

Das Einspeisemodul umfasst bevorzugt wenigstens eine wie vorstehend beschriebene Kopplungseinheit zur nicht-galvanischen Kopplung zweier mit dem Einspeisemodul verbundener Abschnitte eines Bussignalpfads. Dabei ist bevorzugt ein Abschnitt des Bussignalpfads mit den ein oder mehreren Verbrauchern des dem Einspeisemodul zugeordneten Segments des Bussystems elektrisch leitfähig verbunden und der andere Abschnitt ist vorzugsweise mit den ein oder mehreren Verbrauchern eines dazu benachbarten Segments elektrisch leitfähig verbunden. Die Verbindung zwischen dem Einspeisemodul und den Verbrauchern erfolgt dabei vorzugsweise über die vorstehend beschriebenen mit dem Einspeisemodul verbundenen Buskabel.

Bevorzugt umfasst das Einspeisemodul mehrere derartige Kopplungseinheiten, die jeweils zwei Abschnitte eines Bussignalpfads nicht-galvanisch und signalübertragend miteinander koppeln.

Über das Einspeisemodul kann folglich sowohl die Einspeisung des Stroms in ein dem Einspeisemodul zugeordnetes Segment als auch die galvanische Trennung zwischen den Stromversorgungsleitungen benachbarter Segmente und die nicht-galvanische Kopplung von Abschnitten eines Bussignalpfads erfolgen. Dadurch wird es ermöglicht, in einfacher Weise und mit geringem Aufwand ein wie vorstehend beschriebenes segmentiertes Bussystem bereitzustellen, wobei sowohl die Stromversorgungsleitungen als auch die Abschnitte der Bussignalpfade, die verschiedenen Segmenten zugeordnet sind, vollständig galvanisch voneinander getrennt sein können.

Das Bussystem kann prinzipiell eine beliebige Anzahl von Segmenten und insbesondere auch mehr als zwei wie hierin beschriebene Segmente umfassen sowie mehrere Einspeisemodule, die jeweils einem Segment des Bussystems zugeordnet sind und das jeweilige Segment gemäß der vorstehenden Beschreibung in das Bussystem einbinden können.

Bevorzugt umfasst das Bussystem wenigstens eine in der ersten und/oder wenigstens eine in der zweiten Stromversorgungsleitung eines Segments angeordnete elektrische Sicherung, vorzugsweise eine strombegrenzende elektrische Sicherung wie z.B. eine Schmelzsicherung oder andere Überstromschutzsicherung. Eine solche Sicherung kann beispielsweise in einem wie vorstehend beschriebenen Einspeisemodul angeordnet sein. Da der maximale Stromfluss eines Segments des Bussystems bei galvanischer Trennung zwischen den Segmenten nur von der Stromaufnahme der dem Segment zugeordneten Verbraucher abhängt, kann die Sicherung in vorteilhafter Weise auf einen im Vergleich zu der summierten Stromaufnahme aller Segmente geringen Stromwert abgestimmt sein, der beispielsweise etwas höher sein kann als die Summe der erwarteten Stromaufnahme aller Verbraucher des jeweiligen Segments, so dass eine einfache, kostengünstige und gleichzeitig wirksame und sichere elektrische Absicherung erreicht wird.

Die Stromversorgungseinheit wenigstens eines Segments des Bussystems ist vorzugsweise als Konstantspannungsquelle ausgebildet und dazu eingerichtet, eine zeitlich zumindest näherungsweise konstante elektrische Spannung bereitzustellen. Die Stromversorgungseinheit eines Segments kann dabei an zwei voneinander getrennten Ausgängen jeweils eines von zwei verschiedenen elektrischen Potentialen bereitstellen, wobei die von der Stromversorgungseinheit gelieferte Spannung durch den Unterschied dieser Potentiale gebildet ist. Die von den Stromversorgungseinheiten verschiedener Segmente gelieferten Spannungen und insbesondere auch die von den verschiedenen Stromversorgungseinheiten bereitgestellten absoluten Potentiale, die diese Spannungen bilden, sind vorzugsweise zumindest näherungsweise identisch. Die bereitgestellte Spannung kann beispielsweise zumindest näherungsweise konstant 24 Volt betragen, wobei beispielsweise an einem Ausgang einer Stromversorgungseinheit ein Massepotential und an dem anderen Ausgag der Stromversorgungseinheit eine auf das Massepotential bezogene Spannung von 24 Volt bereitgestellt wird. Eine Stromversorgungseinheit ist vorzugsweise als Netzteil, z.B. als Schaltnetzteil, ausgebildet und kann zu seiner eigenen Leistungs- und Stromversorgung beispielsweise mit einem übergeordneten Wechselstrom-Versorgungsnetz verbunden sein.

Bei dem Bussystem kann es sich beispielsweise um ein Feldbussystem handeln, welches mehrere örtlich verteilt angeordnete Verbraucher umfasst. Der Abstand zwischen zwei verschiedenen Verbrauchern kann dabei erheblich sein und z.B. einen oder mehrere Meter betragen. Verschiedene Verbraucher des Bussystems sind vorzugsweise in verschiedenen, voneinander getrennten Gehäusen angeordnet, wobei ein Gehäuse vorzugsweise nach der Gehäuseschutzart IP 67 oder IP 20 oder einer sonstigen gegen Schmutz oder Feuchtigkeit schützenden Gehäuseschutzart ausgebildet ist. Ein Buskabel verläuft vorzugsweise außerhalb der Gehäuse und ist vorzugsweise als gegen Schmutz oder Feuchtigkeit schützendes, für die Verlegung außerhalb von Gehäusen geeignetes und zulässiges Standard-Sensor/Aktor-Kabel, beispielsweise vom Typ M12, mit einem Leiter- bzw. Aderquerschnitt von vorzugsweise mindestens 0,34 mm² ausgebildet. Die Verbindungen zwischen den Kabeln bzw. Buskabeln und den Verbrauchern bzw. den Stromversorgungseinheiten und den Einspeisemodulen sind vorzugsweise durch Steckverbindungen realisiert. Den Abständen zwischen den Verbrauchern entsprechend kann ein Buskabel eine Länge von z.B. einem oder mehreren Metern aufweisen.

Bei dem erfindungsgemäßen Bussystem handelt es sich um ein Sicherheitssystem, welches z. B. zur Erkennung eines Gefahrenfalls bei einer sicherheitskritischen Anlage oder Maschine und zur Durchführung einer Sicherheitsabschaltung im Gefahrenfall einsetzbar ist.

Ein erfindungsgemäßes Sicherheitssystem umfasst eine Sicherheitssteuerung mit einem Ausgang und einem Sicherheitseingang, an die die Busleitung des Bussystems angeschlossen ist, sowie mehrere an die Busleitung angeschlossene Sicherheitsteilnehmer. Die Sicherheitssteuerung und/oder die Sicherheitsteilnehmer bilden dabei Verbraucher des Bussystems, die von den Stromversorgungseinheiten des Bussystems mit Strom versorgt werden. Die Sicherheitsteilnehmer sind dabei vorzugsweise an der zu überwachenden Anlage örtlich verteilt angeordnet.

Ein solches Sicherheitssystem weist als einen Bussignalpfad einen Testsignalpfad auf, der zwischen dem Ausgang und dem Eingang der Sicherheitssteuerung einen vorzugsweise geschlossenen Ring bildet und zur Übertragung eines vorzugsweise dynamischen, d.h. zeitveränderlichen, Ausgangssignals bzw. Testsignals ausgebildet ist. Die Sicherheitsteilnehmer sind durch ihre Anbindung an die Busleitung in den Testsignalpfad eingebunden und derart eingerichtet, dass das Vorliegen eines nicht sicheren Zustands des dem jeweiligen Sicherheitsteilnehmer zugeordneten Schutzgeräts zu einer Unterbrechung des Testsignalpfads führt.

Als Schutzgerät kann zum Beispiel ein sicheres Schutzgerät vorgesehen sein, welches dazu ausgebildet ist, abhängig von einer für die Sicherheit z.B. einer Person relevanten äußeren Einwirkung einen sicheren oder nicht sicheren Zustand anzunehmen. Beispielsweise kann es sich um einen Not-Aus-Taster handeln, der einen oder mehrere z.B. mechanische Schaltkontakte umfasst, die im sicheren, d.h. nicht betätigten, Zustand des Not-Aus-Tasters geschlossen sind und die im nicht sicheren, d.h. betätigten, Zustand des Not-Aus-Tasters geöffnet sind. Ein weiteres Beispiel ist eine Zuhaltungsvorrichtung einer Sicherheitstür, die einen oder mehrere insbesondere magnetisch angesteuerte Schaltkontakte aufweist, die in der sicheren, d.h. geschlossenen, Stellung der Tür geschlossen sind und die in der nicht sicheren, d.h. geöffneten, Stellung der Tür geöffnet sind. Weitere Beispiele eines Schutzgeräts sind eine Lichtschranke, ein Lichtgitter oder ein Laserscanner, die beispielsweise bei freiem Lichtweg einen sicheren und bei nicht freiem Lichtweg einen nicht sicheren Zustand annehmen.

Die Sicherheitsteilnehmer des Bussystems sind dabei wie vorstehend beschrieben derart eingerichtet, dass das Vorliegen eines nicht sicheren Zustands des zugeordneten Schutzgeräts zu einer Unterbrechung des Testsignalpfads führt. Dazu kann beispielsweise ein im sicheren Zustand geschlossener und im nicht sicheren Zustand geöffneter Schalter eines z.B. als Not-Aus-Taster oder als Zuhaltungsvorrichtung für eine Sicherheitstür ausgebildeten Schutzgeräts seriell in den Testsignalpfad eingebunden sein und von diesem als unmittelbarer Signalübertragungsweg genutzt werden, so dass ein Öffnen des Schalters zu einem unmittelbaren Unterbrechen des Testsignalpfads führt. In ähnlicher Weise kann eine in einem nicht sicheren Zustand unterbrochene Lichtschranke bzw. deren durch Lichtsender und Lichtempfänger gebildete Übertragungsstrecke als unmittelbarer Übertragungsweg des Testsignalpfads seriell in den Testsignalpfad eingeschaltet sein. Ebenfalls ist es möglich, dass der sichere und nicht sichere Zustand des Schutzgeräts jeweils durch eine z.B. elektronische Abbildung auf einen geschlossenen und geöffneten Zustand eines seriell in den Testsignalpfad eingeschalteten, vorzugsweise elektronischen, Schalters abgebildet werden, um den Testsignalpfad im sicheren Zustand des Schutzgeräts zu schließen und im nicht sicheren Zustand des Schutzgeräts zu unterbrechen.

Die Sicherheitssteuerung sendet an ihrem Ausgang ein vorzugsweise dynamisches Ausgangssignal oder Testsignal an den Testsignalpfad aus und überwacht, ob ein an dem Sicherheitseingang eingehendes Testsignal einer in der Sicherheitssteuerung abgelegten Erwartungshaltung in Bezug auf das eingehende Testsignal entspricht. Beispielsweise kann die Sicherheitssteuerung überprüfen, ob das eingehende Testsignal eine erwartete Synchronität zu dem ausgesendeten Ausgangssignal bzw. Testsignal und/oder mit einer erwarteten Periodizität auftretende periodische Testlücken einer vorzugsweise vorgegebenen Länge aufweist. Bleibt das Testsignal an dem Sicherheitseingang der Sicherheitssteuerung aus bzw. wird ein eingehendes Testsignal empfangen, welches nicht der Erwartungshaltung entspricht, kann die Sicherheitssteuerung davon ausgehen, dass sich ein Sicherheitsteilnehmer in dem nicht sicheren Zustand befindet oder ein Fehler in dem Bussystem vorliegt, und kann daraufhin eine Sicherheitsabschaltung der überwachten Anlage oder eine sonstige Sicherheitsmaßnahme durchführen, was die gewünschte Sicherheitsfunktion des Bussystems darstellt.

Die mehreren in der vorstehend beschriebenen Weise in den Testsignalpfad eingebundenen und in dem Testsignalpfad miteinander in Serie geschalteten Sicherheitsteilnehmer bilden eine von dem Ausgangssignal bzw. Testsignal zu durchlaufende Kaskade, derart dass ein nicht sicherer Zustand des Schutzgeräts eines beliebigen Sicherheitsteilnehmers zur Unterbrechung des Testsignalpfads und dadurch zum Ausbleiben des erwarteten Testsignals an der Sicherheitssteuerung führt. Das an dem Sicherheitseingang empfangene Testsignal repräsentiert somit eine Sicherheitsinformation bzw. Summeninformation über den Zustand aller Sicherheitsteilnehmer, da ein der Erwartungshaltung entsprechendes Testsignal nur dann zu der Sicherheitssteuerung gelangt, wenn der Testsignalpfad nicht unterbrochen ist, d.h. wenn sich alle Schutzgeräte in ihrem sicheren Zustand befinden. Durch die Kaskadierung und serielle Einbindung der Sicherheitsteilnehmer in den gemeinsamen Testsignalpfad lässt sich somit eine auf einer Mehrzahl von Schutzgeräten basierende Überwachung einer Anlage mit geringem Verkabelungsaufwand erzielen, die im einfachsten Fall lediglich die Belegung eines einzigen Ausgangs und eines einzigen Sicherheitseingangs der Sicherheitssteuerung erfordert.

Gemäß einer vorteilhaften Ausführungsform des vorstehend beschriebenen Sicherheitssystems sind mehrere und vorzugsweise alle Sicherheitsteilnehmer des Systems entlang der Busleitung so in einer Linie angeordnet, dass sowohl der Hinleitungspfad als auch der Rückleitungspfad des Testsignalpfads durch dieselben Sicherheitsteilnehmer hindurch verlaufen. Das Sicherheitssystem weist zudem ein vorzugsweise an dem Ende der Linie angeschlossenes, den Hinleitungspfad und den Rückleitungspfad des Testsignalpfads verbindendes Abschlusselement auf. Die Sicherheitssteuerung ist dazu ausgebildet, an ihrem mit dem Hinleitungspfad verbundenen Ausgang ein Ausgangssignal auszusenden. Das Abschlusselement ist dazu ausgebildet, das Ausgangssignal von dem Hinleitungspfad zu empfangen und in Abhängigkeit von dem von dem Hinleitungspfad empfangenen Ausgangssignal ein gegenüber dem empfangenen Ausgangssignal verändertes Testsignal an den Rückleitungspfad des Testsignalpfads auszugeben.

Bei dieser Ausgestaltung laufen also der Hinleitungspfad und der Rückleitungspfad des Testsignalpfads durch dieselben Sicherheitsteilnehmer hindurch. Dadurch wird eine Linientopologie der Busleitung und der an die Busleitung angeschlossenen Sicherheitsteilnehmer realisiert. Der erforderliche Verkabelungsaufwand wird dadurch gegenüber einer Ringtopologie der Busleitung reduziert, weil es nicht erforderlich ist, den Hinleitungspfad und den Rückleitungspfad des Testsignalpfads in getrennten Kabeln zu führen. Stattdessen können diese zumindest abschnittsweise in gemeinsamen Buskabeln von einem Sicherheitsteilnehmer zum nächsten geführt werden.

Das vorzugsweise an dem Ende der Linie angeordnete Abschlusselement und die durch das Abschlusselement durchgeführte Veränderung bzw. Umwandlung des von dem Hinleitungspfad empfangenen Ausgangssignals bei der Erzeugung des an den Rückleitungsfad ausgegebenen Testsignals dient dabei insbesondere dazu, einen Querschluss zwischen dem Hinleitungspfad und dem Rückleitungspfad des Testsignalpfads zu erkennen. Die Erwartungshaltung, auf die die Sicherheitssteuerung das an dem Sicherheitseingang empfangene Testsignal überprüft, ist dabei vorzugsweise so konfiguriert, dass das Erfüllen der Erwartungshaltung die durch das Abschlusselement durchgeführte Signalveränderung bzw. - umwandlung voraussetzt. Eine Überbrückung des Abschlusselements infolge eines Querschlusses zwischen dem Hinleitungspfad und dem Rückleitungspfad des Testsignalpfads führt dann zu einer Verletzung der Erwartungshaltung und somit zu einem Ansprechen der Sicherheitsfunktion, beispielsweise wenn infolge eines Querschlusses ein gegenüber dem von der Sicherheitssteuerung ausgesendeten Ausgangssignal unverändertes eingehendes Testsignal empfangen wird. Somit wird trotz der Linientopologie und der dabei bestehenden Möglichkeit eines Querschlusses zwischen dem Hinleitungspfad und dem Rückleitungspfad des Testsignalpfads ein hohes Sicherheitsniveau bei geringem Verkabelungsaufwand erreicht. Das Abschlusselement stellt vorzugsweise ebenfalls einen Verbraucher elektrischer Leistung des Bussystems dar. Das Abschlusselement kann dabei über eine direkte Steckverbindung oder ein Buskabel mit dem benachbarten Sicherheitsteilnehmer verbunden sein.

Die Sicherheitssteuerung kann außerdem dazu ausgebildet sein, Daten zu erzeugen und an die Sicherheitsteilnehmer und/oder das Abschlusselement zu senden, die die Daten empfangen und auswerten. Ebenso können das Abschlusselement und/oder die Sicherheitsteilnehmer dazu eingerichtet sein, Daten zu erzeugen und an die Sicherheitssteuerung zu senden, welche die Daten empfängt und auswertet. Vorzugsweise umfasst das Sicherheitssystem dazu einen von den Sicherheitsteilnehmern und dem Abschlusselement gemeinsam genutzten Datenpfad, wobei die Sicherheitsteilnehmer und das Abschlusselement vorzugsweise in einer Reihe hintereinander zum Empfangen und/oder Senden von Daten an den Datenpfad angeschlossen und mit diesem verbunden sind. Der Datenpfad kann als zwischen einem Ausgang und einem Eingang der Sicherheitssteuerung angeordneter ringförmiger Datenpfad mit einem zwischen der Sicherheitssteuerung und dem Abschlusselement verlaufenden Datenhinleitungspfad und einem von dem Abschlusselement zu der Sicherheitssteuerung verlaufenden Datenrückleitungspfad ausgebildet sein. Die Sicherheitssteuerung sendet dabei vorzugsweise Daten über den Datenhinleitungspfad an das Abschlusselement und/oder die Sicherheitsteilnehmer und das Abschlusselement und/oder die Sicherheitsteilnehmer senden bevorzugt Daten über den Datenrückleitungspfad an die Sicherheitssteuerung. Der Datenhinleitungspfad ist dabei vorzugsweise durch den Hinleitungspfad des Testsignalpfads gebildet, d.h. ist mit diesem identisch. Das von der Sicherheitssteuerung an den Hinleitungspfad des Testsignalpfads ausgesendete Ausgangssignal kann dabei Datenmerkmale enthalten, die die von der Sicherheitssteuerung an die Sicherheitsteilnehmer und/oder das Abschlusselement gesendeten Ausgangsdaten repräsentieren. Der Datenrückleitungspfad kann als separater Signalpfad bzw. Bussignalpfad ausgebildet sein. Der Hinleitungspfad und der Datenrückleitungspfad des Datenpfads können dabei durch dieselben Sicherheitsteilnehmer hindurch verlaufen, d.h. dass das Bussystem auch in Bezug auf den Datenpfad eine Linientopologie mit einem entsprechend geringen Verkabelungsaufwand aufweist.

Das vorstehend beschriebene Sicherheitssystem und dessen Sicherheitsfunktion erfüllen vorzugsweise den Sicherheitslevel SIL 3 gemäß der Norm IEC 61508 und/oder den Sicherheitslevel Performance Level e ("PL e") gemäß der Norm EN ISO 13849-1. Der Sicherheitseingang der Sicherheitssteuerung umfasst bevorzugt einen sicheren Eingang. Der sichere Eingang zeichnet sich durch eine fehlersichere Auswertung des eingehenden Signals in der Sicherheitssteuerung aus, wozu zum Beispiel eine zweikanalige Auswertung erfolgen kann, die z.B. durch zwei parallel arbeitende redundante und einander kontrollierende Mikroprozessoren durchgeführt wird.

Die Erfindung betrifft auch ein Einspeisemodul gemäß Anspruch 12, das zum Einsatz in dem beschriebenen erfindungsgemäßen Bussystem ausgebildet ist. Die hierin unter Bezugnahme auf das erfindungsgemäße Bussystem beschriebenen vorteilhaften Ausführungsformen des Einspeisemoduls und die entsprechenden Vorteile gelten entsprechend.

Das erfindungsgemäße Einspeisemodul umfasst:
- ein erstes Steckverbindungselement mit einem ersten und einem zweiten Anschluss zur Verbindung mit jeweils einem versorgungsseitigen Abschnitt einer ersten und zweiten Stromversorgungsleitung eines dem Einspeisemodul zugeordneten Segments eines Bussystems und einer damit verbundenen Stromversorgungseinheit,
- ein zweites Steckverbindungselement mit einem ersten und einem zweiten Anschluss zur Verbindung mit jeweils einem verbraucherseitigen Abschnitt der ersten und zweiten Stromversorgungsleitung des Bussegments, und mit wenigstens einem dritten Anschluss zur Verbindung mit einem dem Segment zugeordneten Abschnitt wenigstens eines Bussignalpfads,
   wobei die ersten und zweiten Anschlüsse des ersten und zweiten Steckverbindungselements elektrisch leitfähig miteinander verbunden sind,
- ein drittes Steckverbindungselement mit einem ersten und einem zweiten Anschluss zur Verbindung mit jeweils einem Abschnitt einer ersten und zweiten Stromversorgungsleitung eines benachbarten Segments des Bussystems und mit wenigstens einem dritten Anschluss zur Verbindung mit einem dem benachbarten Segments zugeordneten Abschnitt des wenigstens einen Bussignalpfads, wobei der erste und der zweite Anschluss des dritten Steckverbindungselements jeweils von den ersten und den zweiten Anschlüssen des ersten und zweiten Steckverbindungselements galvanisch getrennt sind, und wobei das Einspeisemodul ferner umfasst:
- wenigstens eine Kopplungseinheit zur signalübertragenden nicht-galvanischen Kopplung des wenigstens einen dritten Anschlusses des zweiten Steckverbindungselements mit dem wenigstens einen dritten Anschluss des dritten Steckverbindungselements.

Nachfolgend wird die Erfindung beispielhaft anhand einer vorteilhaften Ausführungsform unter Bezugnahme auf die beigefügten Figuren beschrieben. Es zeigen:
- Fig. 1: ein Bussystem gemäß einer Ausführungsform der Erfindung,
- Fig. 2: ein Bussystem gemäß einer anderen Ausführungsform der Erfindung, und
- Fig. 3: ein Bussystem gemäß einer weiteren Ausführungsform der Erfindung.

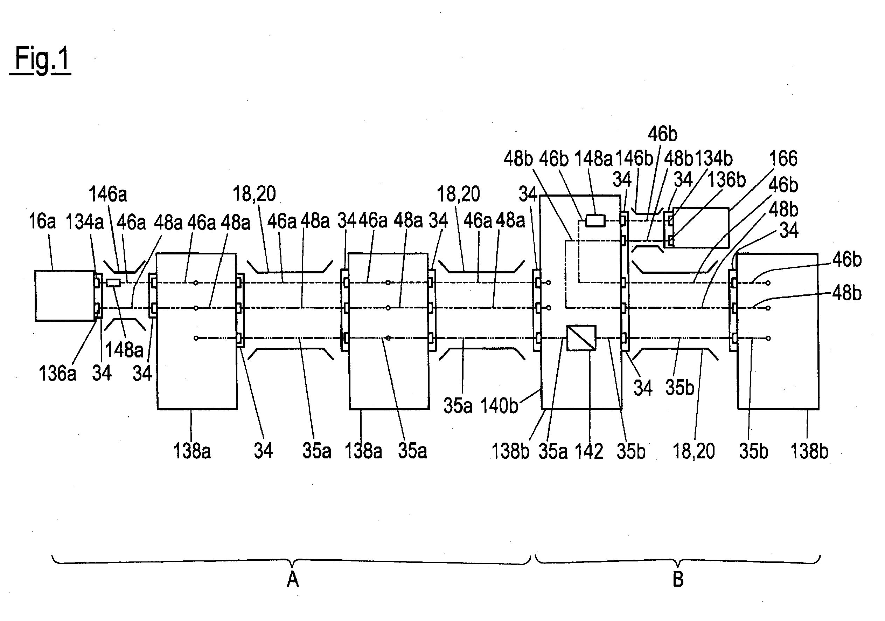

Fig. 1 zeigt ein Bussystem gemäß einer Ausführungsform der Erfindung. Das Bussystem umfasst eine Busleitung 18, die durch mehrere Buskabel 20 gebildet ist, zwei separate, jeweils als Netzteil und insbesondere als Schaltnetzteil ausgebildete elektrische Stromversorgungseinheiten 16a, 16b sowie mehrere Verbraucher 138a, 138b von elektrischer Leistung, die über die Busleitung 18 miteinander verbunden sind.

Ein Kabel ist in den Figuren prinzipiell jeweils durch zwei aufeinander zu gewandte Kammern dargestellt, die den Mantel des Kabels repräsentieren, wobei in der Regel eine der Klammern mit dem entsprechenden Bezugszeichen versehen ist, d.h. dem Bezugszeichen 20 für ein Buskabel, dem Bezugszeichen 28 für ein nachstehend beschriebenes Anschaltungskabel oder einem der Bezugszeichen 146a, 146b, 146c für ein Stromkabel. Die zwischen den Kammern eines Kabels jeweils eingezeichneten Linien repräsentieren jeweils eine in dem jeweiligen Kabel angeordnete elektrische Leitung, welche aus einer oder mehreren in dem Kabelmantel angeordneten elektrischen Leitungsadern bestehen kann.

Das in Fig. 1 gezeigte Bussystem ist in Bezug auf seine Stromversorgung in zwei Segmente A und B unterteilt, die jeweils zwei Verbraucher 138a, 138b von elektrischer Leistung umfassen, wobei dem Segment A die Verbraucher 138a und die Stromversorgungseinheit 16a zugeordnet sind und wobei dem Segment B die Verbraucher 138b und die Stromversorgungseinheit 16b zugeordnet sind. Der in Fig. 1 links dargestellte Verbraucher 138b des Segments B bildet dabei ein nachstehend im Einzelnen erläutertes Einspeisemodul 140b. Das Bussystem könnte im Rahmen der Erfindung aber auch mehr als zwei Segmente A, B umfassen und/oder mehrere Einspeisemodule 140b, die verschiedenen Segmenten A, B zugeordnet sind. Die Stromversorgungseinheiten 16a, 16b stellen jeweils an einem ersten Anschluss 134a, 134b ein erstes Gleichspannungspotential, z.B. 24 Volt gegenüber Masse, und an einem zweiten Anschluss 136a, 136b ein zweites Gleichspannungspotential, z.B. 0 Volt bzw. Massepotential, bereit. Prinzipiell könnte das Bussystem auch in mehr als zwei wie vorstehend beschriebene Segmente A, B mit jeweils einem oder mehreren Verbrauchern 138a, 138b unterteilt sein.

Die zwei benachbarten Segmente A, B weisen jeweils eine erste Stromversorgungsleitung 46a, 46b für das erste elektrische Potential und eine zweite Stromversorgungsleitung 48a, 48b für das zweite elektrische Potential auf, über die die Verbraucher 138a, 138b des jeweiligen Segments A, B jeweils mit dem entsprechenden ersten bzw. zweiten Anschluss 134a, 134b, 136a, 136b der zugeordneten Stromversorgungseinheit 16a, 16b elektrisch leitfähig verbunden sind. Die Verbraucher 138a, 138b werden dadurch mit elektrischem Strom versorgt. Dadurch wird es den Verbrauchern 138a, 138b ermöglicht, ihre für den Betrieb des Bussystems notwendigen Funktionen zu erfüllen und insbesondere an dem durch das Bussystem bezweckten Informationsaustausch zwischen den Verbrauchern 138a, 138b teilzunehmen und die damit in Verbindung stehenden Operationen durchzuführen. Die dafür vorgesehenen stromverbrauchenden elektrischen und/oder elektronischen Elemente der Verbraucher 138a, 138b und deren Verbindungen mit den Stromversorgungsleitungen 46a, 46b, 48a, 48b sind in Fig. 1 nicht eigens dargestellt. Diese Elemente können beispielsweise einen Mikroprozessor oder ähnliche zur Signalverarbeitung und/oder Übertragung geeignete elektrische oder elektronische Komponenten umfassen.

Die erste und die zweite Stromversorgungsleitung 46a, 48a des Segments A sind dabei von der ersten und der zweiten Stromversorgungsleitung 46b, 48b des Segments B galvanisch getrennt.

Das erste Segment A ist über den in Fig. 1 links dargestellten Verbraucher 138a und ein an diesen angeschlossenes Kabel 146a mit der Stromversorgungseinheit 16a verbunden. Das Segment B ist über das Einspeisemodul 140b und über ein an dieses angeschlossenes Kabel 146b mit der Stromversorgungseinheit 16b verbunden.

Das Einspeisemodul 140b verbindet das Segment B sowohl über das Kabel 146b mit der zugeordneten Stromversorgungseinheit 16b als auch über ein Buskabel 20 mit den Verbrauchern 138a des benachbarten Segments A. Das Einspeisemodul 140b ist dabei nicht nur mit der ersten und zweiten Stromversorgungsleitung 46b, 48b des Segments B verbunden, sondern zudem mit der ersten und zweiten Stromversorgungsleitung 46a, 48a des Segments A, wobei die Stromversorgungsleitungen 46a, 48a, 46b, 48b der verschiedenen Segmente A, B in dem Einspeisemodul 140b galvanisch voneinander getrennt sind. Die Verbindung zwischen dem Einspeisemodul 140b und dem in Fig. 1 rechts dargestellten Verbraucher 138a des Segments A ist dabei ebenso wie die übrigen Verbindungen zwischen zwei Verbrauchern 138a, 138b durch ein Buskabel 20 mit jeweils einer Ader zur Bildung der jeweiligen ersten und zweiten Stromversorgungsleitung 46a, 48a und einer Ader zur Bildung eines Abschnitts 35a des nachfolgend beschriebenen, aus den Abschnitten 35a und 35b bestehenden Bussignalpfads gebildet. Die Stromversorgungsleitungen 46a, 48a des Segments A enden in dem Einspeisemodul 140b, wo sie, wie nachfolgend beschrieben, mit der Kopplungseinheit 142 verbunden sind, wobei die entsprechenden Verbindungen in der Darstellung in Fig. 1 allerdings nicht gezeigt sind.

Das Bussystem umfasst einen Bussignalpfad, der aus zwei galvanisch voneinander getrennten Abschnitten 35a, 35b besteht, wobei der Abschnitt 35a dem Segment A zugeordnet und mit den Verbrauchern 138a des Segments A elektrisch leitfähig verbunden ist und wobei der Abschnitt 35b dem Segment B zugeordnet und mit den Verbrauchern 138b des Segments B elektrisch leitfähig verbunden ist. Das Einspeisemodul 140b umfasst eine Kopplungseinheit 142, die zur nicht-galvanischen signalübertragenden Kopplung der beiden Bussignalpfadabschnitte 35a, 35b ausgebildet ist, um dadurch einen durchgehenden signalübertragenden Bussignalpfad zwischen allen Verbrauchern 138a, 138b zu schaffen. Die Verbraucher 138a, 138b sind jeweils an den zugehörigen Absschnitt 35a, 35b des Bussignalpfads angeschlossen und dazu eingerichtet, an der Kommunikation über den Bussignalpfad 35a, 35b teilzunehmen, d.h. Informationen zu erzeugen und über den Bussignalpfad 35a, 35b auszusenden und/oder über den Bussignalpfad 35a, 35b übertragene Informationen zu empfangen und auszuwerten. Die für die entsprechende Signalerzeugung und Signalverarbeitung vorgesehenen Elemente der Verbraucher 138a, 138b, die vorzugsweise über die Stromversorgungsleitungen 46a, 46b, 48a, 48b mit Strom versorgt werden, sind in Fig. 1 nicht eigens dargestellt.

Die Kopplungseinheit 142 zur nicht-galvanischen Signalübertragung zwischen den Abschnitten 35a, 35b des Bussignalpfads umfasst im vorliegenden Ausführungsbeispiel eine kombinierte Sende- und Empfangseinheit, die mit dem Abschnitt 35a elektrisch leitfähig verbunden ist, und eine kombinierte Sende- und Empfangseinheit, die mit dem Abschnitt 35b elektrisch leitfähig verbunden ist. Eine Sende- und Empfangseinheit kann beispielsweise eine Sende- und Empfangsspule einer induktiven Signalübertragungsstrecke oder einen optischen Sender und einen optischen Empfänger eines z.B. mehrkanaligen Optokopplers umfassen. Die mit dem Abschnitt 35a elektrisch leitfähig verbundene Sende- und Empfangseinheit wird dabei über die Stromversorgungsleitungen 46a, 48a des Segments A mit Strom versorgt und die mit dem Abschnitt 35b elektrisch leitfähig verbundene Sende- und Empfangseinheit wird über die Stromversorgungsleitungen 46b, 48b des Segments B mit Strom versorgt, wobei die galvanische Trennung zwischen den Stromversorgungsleitungen 46a, 46b, 48a, 48b der Segmente A und B aufrecht erhalten bleibt.

Das Einspeisemodul 140b, die übrigen Verbraucher 138a, 138b und die Stromversorgungseinheiten 16a, 16b weisen jeweils Steckverbindungselemente, d.h. Steckverbinder oder Steckerbuchsen, auf, über die sie mit entsprechenden Steckverbindungselementen der Buskabel 20 bzw. Kabel 146a, 146b zur Bildung einer Steckverbindung 34 verbindbar sind, wodurch die elektrische Verbindung zu den in den Buskabeln 20 bzw. Kabeln 146a, 146b enthaltenen Leitungsadern hergestellt wird.

In den Stromversorgungsleitungen 46a und 46b ist jeweils eine elektrische Sicherung 148a, 148b angeordnet, wobei die elektrische Sicherung 148a in dem mit der Stromversorgungseinheit 16a verbundenen Kabel 146a angeordnet ist und die elektrische Sicherung 148b in dem Einspeisemodul 140b angeordnet ist. Bei den Sicherungen 148a, 148b kann es sich um strombegrenzende Sicherungen wie z.B. Schmelzsicherungen oder andere Überstromschutzsicherungen handeln.

Durch die Segmentierung des Bussystems in Bezug auf die Energieversorgung und durch die galvanische Trennung zwischen den Stromversorgungsleitungen 46a, 46b, 48a, 48b und den Bussignalpfadabschnitten 35a, 35b der Segmente A und B wird die elektromagnetische Verträglichkeit (EMV) des Bussystems erheblich gesteigert. Außerdem wird die Strombelastung, für die die Komponenten des Bussystems ausgelegt sein müssen, reduziert, so dass das Sicherungskonzept des Bussystems vereinfacht und die Komplexität des Bussystems reduziert wird. Gleichzeitig lässt sich das segmentierte Bussystem sehr einfach planen und implementieren, indem an geeigneten Stellen zwischen zwei zu erzeugenden galvanisch getrennten Segmenten A und B ein wie vorstehend beschriebenes Einspeisemodul 140b mit einer entsprechenden Stromversorgungseinheit 16a, 16b eingesetzt wird. Für die Auslegung der Stromversorgungseinheiten 16a, 16b und der Sicherungen 148a, 148b etc. müssen dabei nur die maximale Stromaufnahme der Verbraucher 138a, 138b des jeweils zugeordneten Segments A, B und die Leitungslängen in demselben Segment A, B berücksichtigt werden.

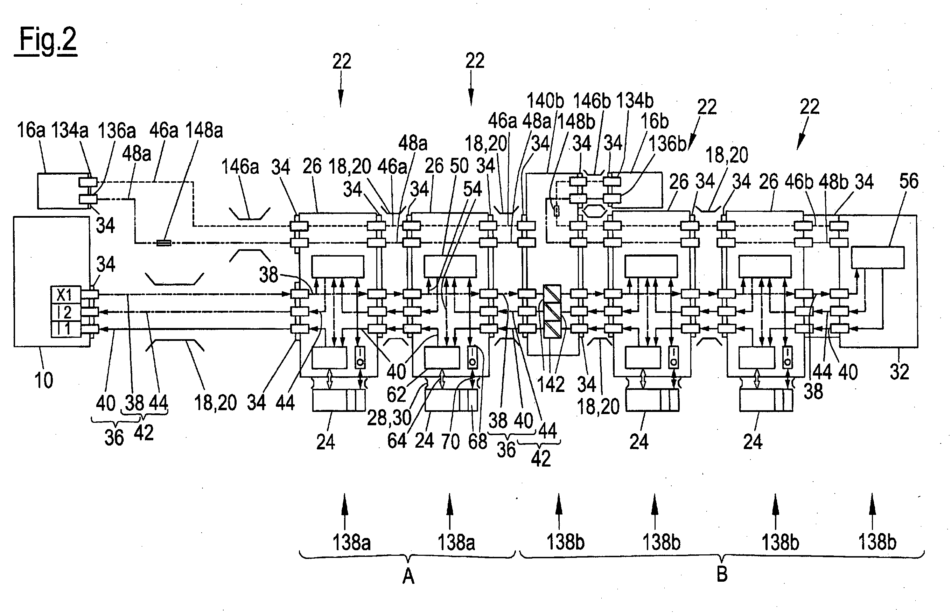

Fig. 2 zeigt ein Bussystem gemäß einer weiteren Ausführungsform der Erfindung, welches als Sicherheitssystem ausgebildet ist. Das Sicherheitssystem entspricht im Wesentlichen dem in Fig. 1 gezeigten Bussystem mit den nachfolgend erläuterten zusätzlichen Merkmalen. Nachstehend wird zuerst der allgemeine Aufbau des Sicherheitssystems und dessen Funktionsweise erläutert, wobei darauf folgend im Speziellen auf die elektrische Energieversorgung des Bussystems eingegangen wird.

Das Sicherheitssystem umfasst eine Sicherheitssteuerung 10, die in einem Schaltschrank angeordnet sein kann und einen Ausgang X1, einen Sicherheitseingang I1 sowie einen nicht sicheren Standardeingang I2 umfasst. Ferner sind zwei getrennte Stromversorgungseinheiten 16a, 16b zur Stromversorgung des Sicherheitssystems vorgesehen.

Das Sicherheitssystem umfasst eine Busleitung 18 mit mehreren Buskabeln 20, wobei eines der Buskabel 20 an die Sicherheitssteuerung 10 angeschlossen ist. Das Sicherheitssystem umfasst ferner mehrere Sicherheitsteilnehmer 22, die über die Buskabel 20 in einer Linie hintereinander geschaltet und über die Busleitung 18 mit der Sicherheitssteuerung 10 verbunden sind. Ferner ist ein Einspeisemodul 140b vorgesehen, welches nachstehend genauer erläutert ist. Das Sicherheitssystem ist als Feldbussystem ausgebildet, d.h. dass die Komponenten des Sicherheitssystems, insbesondere die Sicherheitsteilnehmer 22 und ggf. das Einspeisemodul 140b, örtlich verteilt angeordnet sind.

Im Folgenden werden die Sicherheitsteilnehmer 22 beschrieben, wobei die die Bestandteile der Sicherheitsteilnehmer 22 betreffenden Bezugszeichen in Fig. 2 der Übersichtlichkeit halber nicht ausnahmslos für alle Sicherheitsteilnehmer 22, sondern teilweise nur für den zweiten Sicherheitsteilnehmer 22 von links eingezeichnet sind. Die Sicherheitsteilnehmer 22 umfassen jeweils ein Schutzgerät 24 und ein Anschaltungsmodul 26, welches über eine durch ein Anschaltungskabel 28 gebildete Anschaltungsleitung 30 mit dem jeweiligen Schutzgerät 24 verbunden ist und welches direkt mit den jeweils benachbarten Buskabeln 20 verbunden ist.

Am Ende der durch die Sicherheitsteilnehmer 22 gebildeten Linie befindet sich ein Abschlusselement 32, welches hier direkt, d.h. ohne ein zwischengeschaltetes Kabel, mit dem letzten Sicherheitsteilnehmer 22 der Linie verbunden ist. Prinzipiell könnte das Abschlusselement 32 aber auch durch ein weiteres Buskabel an den entsprechenden Sicherheitsteilnehmer 22 angeschlossen sein.

Die Busleitung 18 und die an die Busleitung 18 angeschlossenen Sicherheitsteilnehmer 22 sowie das Einspeisemodul 140b bilden einen ringförmigen Testsignalpfad 36 mit einem mit dem Ausgang X1 der Sicherheitssteuerung 10 verbundenen Hinleitungspfad 38 und einem mit dem Sicherheitseingang I1 der Sicherheitssteuerung 10 verbundenen Rückleitungspfad 40, wobei der Hinleitungspfad 38 und der Rückleitungspfad 40 über das Abschlusselement 32 miteinander verbunden sind und sowohl der Hinleitungspfad 38 als auch der Rückleitungspfad 40 durch die Sicherheitsteilnehmer 22 und das Einspeisemodul 140b hindurch verlaufen. Ferner bilden die Sicherheitsteilnehmer 22, die Busleitung 18, das Abschlusselement 32 und das Einspeisemodul 140b einen Datenpfad 42 aus, der einen durch den Hinleitungspfad 38 des Testsignalpfads 36 gebildeten, d.h. mit diesem identischen, Datenhinleitungspfad und einen separaten, an den Eingang I2 der Sicherheitssteuerung 10 angeschlossenen Datenrückleitungspfad 44 umfasst, die zusammen eine Ringbusleitung bilden. Der Hinleitungspfad 38 und der Rückleitungspfad 40 des Testsignalpfads 36 und der Rückleitungspfad 44 des Datenpfads 42 bilden jeweils einen Bussignalpfad des Bussystems.

In Fig. 2 sind der Übersichtlichkeit halber nicht alle einzelnen, die Bussignalpfade 38, 40, 44 darstellenden Pfeillinien einzeln mit Bezugszeichen versehen. In Fig. 2 gehören allerdings alle Pfeillinien, die zumindest abschnittsweise entlang derselben parallel zur Bildhorizontalen verlaufenden Geraden verlaufen, jeweils zu demselben Bussignalpfad 38, 40, 44, d.h. die Pfeillinien mit einem auf der Höhe des Ausgangs X1 parallel zur Bildhorizontalen verlaufenden Abschnitt gehören zu dem Hinleitungspfad 38 des Testsignalpfads 36, die Pfeillinien mit einem auf der Höhe des Eingangs I2 parallel zur Bildhorizontalen verlaufenden Abschnitt gehören zu dem Rückleitungspfad 44 des Datenpfads 42 und die Pfeillinien mit einem auf der Höhe des Sicherheitseingangs I1 parallel zur Bildhorizontalen verlaufenden Abschnitt gehören zu dem Rückleitungspfad 40 des Testsignalpfads 36.

Das Einspeisemodul 140b weist drei Kopplungseinheiten 142 auf, mit denen jeweils zwei Abschnitte eines der Bussignalpfade 38, 40, 44 nicht-galvanisch miteinander gekoppelt sind.

Neben den Bussignalpfaden 38, 40, 44 sind Stromversorgungsleitungen 46a, 48a, 46b, 48b vorgesehen, über die die Sicherheitssteuerung 10, die Sicherheitsteilnehmer 22, das Abschlusselement 32 und das Einspeisemodul 140b mit Strom versorgt werden. Die Anschaltungskabel 28 können jeweils eine in Fig. 2 nicht dargestellte erste und zweite Stromversorgungsader umfassen, über die das jeweilige Schutzgerät 24 an eine jeweilige erste und zweite Stromversorgungsleitung 46a, 48a, 46b, 48b anschließbar und dadurch mit Strom versorgbar ist.

Wie in Fig. 2 gezeigt, sind der Testsignalpfad 36, der Datenpfad 42, die erste Stromversorgungsleitung 46a bzw. 46b und die zweite Stromversorgungsleitung 48a bzw. 48b zwischen zwei Sicherheitsteilnehmern 22 jeweils in der gemeinsamen Busleitung 18 angeordnet und werden in denselben gemeinsamen Buskabeln 20 der Busleitung 18 geführt. Die Buskabel 20 weisen dabei jeweils eine elektrisch leitfähige Ader für den Hinleitungspfad 38 des Testsignalpfads 36, der gleichzeitig den Datenhinleitungspfad darstellt, für den Datenrückleitungspfad 44, für die erste Stromversorgungsleitung 46a bzw. 46b und für die zweite Stromversorgungsleitung 48a bzw. 48b auf, so dass die Verkabelung der Sicherheitsteilnehmer 22 und des Einspeisemoduls 140b miteinander durch eine linienförmige Busleitung 18 aus Buskabeln 20 mit jeweils mindestens fünf Adern realisiert ist. Es ist somit nur ein Buskabel 20 erforderlich, um zwei benachbarte Sicherheitsteilnehmer 22 miteinander bzw. mit dem Einspeisemodul 140b zu verbinden. Die unmittelbare Anbindung der Sicherheitsteilnehmer 22 an die Sicherheitssteuerung 10 ist in der in Fig. 2 dargestellten Ausführungsform über ein dreiadriges Buskabel 20 ausgeführt.

Nachfolgend wird die Funktionsweise des Sicherheitssystems von Fig. 2 erläutert:
Von der Sicherheitssteuerung 10 wird ein Ausgangssignal erzeugt und über den Ausgang X1 an den Hinleitungspfad 38 ausgesendet. Dieses Ausgangssignal wird im Wesentlichen unverändert zu dem Abschlusselement 32 übertragen. Dabei durchläuft das Ausgangssignal die Anschaltungsmodule 26 der Sicherheitsteilnehmer 22, durch welche das Ausgangssignal wie in Fig. 2 ersichtlich jeweils direkt und ohne Unterbrechungsmöglichkeit im Wesentlichen unverändert durchgeschleift wird, sowie das Einspeisemodul 140b, welches das Ausgangssignal über die zugehörige Kopplungseinheit 142 im Wesentlichen unverändert nicht-galvanisch überträgt und an den nächsten Sicherheitsteilnehmer 22 in der Linie weiterleitet. Gleichzeitig ist in den Anschaltungsmodulen 26 jeweils eine Logikeinheit 50 (siehe der zweite Sicherheitsteilnehmer 22 von links in Fig. 2) mit einem Mikroprozessor vorgesehen, die über einen Signalpfad 54 mit dem Hinleitungspfad 38 verbunden ist und dazu eingerichtet ist, das auf dem Hinleitungspfad 38 übertragene Ausgangssignal zu überwachen, beispielsweise zum Zweck einer Synchronisierung.

Das von der Sicherheitssteuerung erzeugte, über den Hinleitungspfad 38 ausgesendete Ausgangssignal basiert z.B. auf elektrischer Spannung und weist mit einer vorgegebenen Zykluszeit periodisch auftretende Synchronisationsmerkmale und zeitlich zwischen den Synchronisationsmerkmalen angeordnete Datenmerkmale auf, die jeweils ein Datenbit der Ausgangsdaten repräsentieren, die von der Sicherheitssteuerung 10 an die Sicherheitsteilnehmer 22 und das Abschlusselement 32 ausgesendet werden.

Das Abschlusselement 32 ist dazu eingerichtet, das Ausgangssignal von dem Hinleitungspfad 38 zu empfangen und in Abhängigkeit von dem von dem Hinleitungspfad 38 empfangenen Ausgangssignal ein gegenüber dem empfangenen Ausgangssignal verändertes Testsignal an den Rückleitungspfad 40 des Testsignalpfads 36 auszusenden. Das über den Rückleitungspfad 40 übertragene Testsignal unterscheidet sich somit von dem von der Sicherheitssteuerung 10 ausgesendeten Ausgangssignal. Das Abschlusselement 32 ist vorzugsweise dazu eingerichtet, ein Testsignal auszusenden, das mit dem Auftreten der Synchronisationsmerkmale in dem Ausgangssignal der Sicherheitssteuerung 10 synchronisiert ist und überwacht dazu das Auftreten der Synchronisationsmerkmale in dem empfangenen Ausgangssignal. Beispielsweise kann das Testsignal einen hohen Signalpegel mit periodisch, insbesondere mit der Zykluszeit des Ausgangssignals, auftretenden Testlücken mit einem niedrigen Pegel aufweisen, wobei die Testlücken in dem Testsignal vorzugsweise zu den Synchronisationsmerkmalen in dem Ausgangssignal synchronisiert sind. Der Unterschied zwischen dem von der Sicherheitssteuerung 10 erzeugten Ausgangssignal und dem von dem Abschlusselement 32 erzeugten Testsignal umfasst vorzugsweise, dass das Testsignal nicht die in dem Ausgangssignal enthaltenen Datenmerkmale aufweist. Die in dem Ausgangssignal enthaltenen Datenmerkmale können also nicht nur der gleichzeitigen Übertragung von Daten zusätzlich zu den Synchronisationsmerkmalen über den gemeinsamen Hinleitungspfad 38 dienen, sondern auch der Unterscheidbarkeit des von der Sicherheitssteuerung 10 ausgesendeten Ausgangssignal und dem von dem Abschlusselement 32 erzeugten Testsignal.

Das Abschlusselement 32 weist zur Durchführung der vorstehenden Operationen eine mit dem Hinleitungspfad 38 verbundene Logikeinheit 56 mit einem Mikroprozessor auf, die das über den Hinleitungspfad 38 übertragene Ausgangssignal empfängt und auswertet. Die Logikeinheit 56 ist mit einem in Fig. 2 nicht eigens dargestellten Testsignalgenerator des Abschlusselements 32 verbunden und steuert diesen an, um das Testsignal aktiv zu generieren und an den mit dem Testsignalgenerator verbundenen Rückleitungspfad 40 des Testsignalpfads 36 signaltreibend auszusenden. Um die Synchronisation zwischen Ausgangssignal und Testsignal durchzuführen, kann das Abschlusselement 32 eine eigene, in dem Abschlusselement 32 vorhandene und von dem empfangenen Ausgangssignal unabhängige Zeitbasis verwenden, beispielsweise einen Taktgeber des Mikroprozessors der Logikeinheit 56.

Der Rückleitungspfad 40 des Testsignalpfads 36 verläuft durch die Sicherheitsteilnehmer 22 hindurch. Diese sind dazu eingerichtet, den Rückleitungspfad 40 bei Vorliegen bzw. Eintreten eines nicht sicheren Zustands ihres jeweiligen Schutzgeräts 24 zu unterbrechen. Die Anschaltungsmodule 26 weisen dazu jeweils eine Testschaltung 62 (wie es im zweiten Sicherheitsteilnehmer 22 von links in Fig. 2 angegeben ist) auf, die über Verbindungen 64 der Anschaltungsleitung 30 mit dem jeweiligen Schutzgerät 24 verbunden ist, wobei die Testschaltung 62 in Zusammenwirken mit dem Schutzgerät 24 eine Unterbrechung des Rückleitungspfads 40 des Testsignalpfads 36 bei Vorliegen eines nicht sicheren Zustands des Schutzgeräts 24 bewirkt.

Das Schutzgerät 24 kann beispielsweise zumindest einen Signalübertragungspfad umfassen, der bei dem Eintreten eines nicht sicheren Zustands des Schutzgeräts 24 unterbrochen wird. Beispielsweise kann es sich bei dem Schutzgerät 24 um einen Not-Aus-Taster mit zumindest einem über einen Knopf des Not-Aus-Tasters mechanisch betätigbaren elektrischen Schalter, insbesondere Öffner, handeln, der im sicheren, d.h. nicht betätigten, Zustand des Not-Aus-Tasters geschlossen ist und im nicht sicheren, d.h. betätigten, Zustand des Not-Aus-Tasters geöffnet ist. Ein weiteres Beispiel ist eine Zuhaltungsvorrichtung für eine Schutztür, die zumindest einen, z.B. magnetisch betätigbaren, Schalter umfasst, der bei geschlossener Schutztür geschlossen ist und bei geöffneter Schutztür geöffnet ist. Ebenso kann das Schutzgerät 24 eine Lichtschranke mit einem optischen Signalübertragungsweg umfassen, der durch einen zu überwachenden Raumbereich hindurch verläuft und im sicheren Zustand, d.h. bei freiem Raumbereich, eine Signalübertragung gewährleistet. Bei dem Auftreten eines nicht sicheren Zustands, d.h. bei Eintreten eines Objekts in den überwachten Raumbereich, wird der optische Signalübertragungsweg automatisch unterbrochen.

In den vorstehenden Fällen ist der wenigstens eine unterbrechbare Signalübertragungspfad, d.h. der elektrische Schalter bzw. der optische Signalübertragungsweg, vorzugsweise direkt seriell in den Rückleitungspfad 40 des Testsignalpfads 36 eingeschaltet und wird als unmittelbarer Übertragungsweg für das Testsignal genutzt, so dass der Eintritt des nicht sicheren Zustands und die damit einhergehende Unterbrechung des Signalübertragungspfads unmittelbar eine Unterbrechung des Testsignalpfads 36 bedeutet. Die in der Anschaltungsleitung 30 angeordnete Verbindung 64 zwischen der Testschaltung 62 und dem Schutzgerät 24 kann dabei einen Hinleiter und einen Rückleiter umfassen, durch den der jeweilige unterbrechbare Signalübertragungspfad direkt seriell in den Rückleitungspfad 40 eingeschaltet ist. Die Testschaltung 62 kann dabei im einfachsten Fall allein in der elektrisch leitfähigen Einbindung des Hinleiters und des Rückleiters in den Testsignalpfad 36 bestehen. Ein Schutzgerät 24 kann auch mehrere solche unterbrechbare Signalübertragungspfade, insbesondere Schalter, umfassen, die vorzugsweise gemeinsam und äquivalent schalten bzw. unterbrochen werden und bevorzugt in Serie zueinander in den Testsignalpfad 36 eingeschaltet sind.

Ein Schutzgerät 24 kann auch einen, vorzugsweise digitalen, Schaltsignalausgang aufweisen, an dem das Schutzgerät 24 ein Schaltsignal ausgibt, das den Zustand "sicher" oder "nicht sicher" des Schutzgeräts 24 angibt bzw. repräsentiert, beispielsweise einen OSSD-(output signal switching device)-Schaltsignalausgang. In diesem Fall kann werden der sichere und der nicht sichere Zustand des Schutzgeräts 24 vorzugsweise über eine elektrisch oder elektronische Umwandlung bzw. Abbildung auf einen geschlossenen bzw. geöffneten Zustand eines elektrischen oder elektronischen Schalters, insbesondere eines Feldeffekttransistors, abgebildet, der in dem Rückleitungspfad 40 des Testsignalpfads 36 in Serie geschaltet ist und diesen somit unterbrechen kann. Die Verbindung 64 der Anschaltungsleitung 30 kann dann eine Schaltsignalleitung umfassen, die mit dem Schaltsignalausgang des Schutzgeräts 24 verbunden ist und dessen Schaltsignal an die Testschaltung 62 überträgt. Die Testschaltung 62 kann den vorstehend beschriebenen, in den Testsignalpfad 36 eingeschalteten elektrischen oder elektronischen Schalter umfassen und diesen abhängig von dem Schaltsignal des Schutzgeräts 24 in der vorstehend beschriebenen Weise öffnen und schließen.

Die Sicherheitssteuerung 10 ist dazu eingerichtet, das über den Rückleitungspfad 40 des Testsignalpfads 36 übertragene Signal an dem Sicherheitseingang I1 zu empfangen und mit einer in der Sicherheitssteuerung 10 konfigurierten Erwartungshaltung zu vergleichen. Dabei überprüft die Sicherheitssteuerung 10 beispielsweise, ob in den erwarteten Abständen und zu den erwarteten Zeitpunkten, d.h. synchron zu den ausgesendeten Synchronisationsmerkmalen, jeweils eine Testlücke mit der erwarteten Dauer empfangen wird. Entspricht das empfangene Signal nicht dieser Erwartungshaltung, lässt dies auf einen nicht sicheren Zustand zumindest eines Schutzgeräts 24 oder einen Funktionsfehler des Sicherheitssystems schließen und die Sicherheitssteuerung 10 leitet eine geeignete Sicherheitsmaßnahme ein, z.B. eine Sicherheitsabschaltung einer überwachten Anlage durch Unterbrechung der Stromzufuhr zu dieser Anlage.

Da sich das bei dem Betrieb des Sicherheitssystems über den Rückleitungspfad 40 übertragene Testsignal von dem über den Hinleitungspfad 38 übertragenen Ausgangssignal unterscheidet und nur das Testsignal der Erwartungshaltung der Sicherheitssteuerung 10 entspricht, führt z.B. ein Querschluss zwischen dem Hinleitungspfad 38 und dem Rückleitungspfad 40 des Testsignalpfads 36 zu einem Ausbleiben des erwarteten Signals an dem Sicherheitseingang I1. Ein solcher Funktionsfehler, wie er beispielsweise bei einer Quetschung eines Buskabels 20 auftreten kann, führt folglich zuverlässig zu einer Verletzung der Erwartungshaltung der Sicherheitssteuerung 10 und zu einer Sicherheitsabschaltung, so dass eine Tolerierung eines solchen Fehlerzustands durch die Sicherheitsteuerung 10 ausgeschlossen ist.

Die Logikeinheiten 56, 50 des Abschlusselements 32 und der Anschaltungsmodule 26 sind jeweils in dem Datenpfad 42 bzw. Datenrückleitungspfad 44 angeordnet und dazu eingerichtet, in der im Folgenden näher erläuterten Weise Daten über den Datenpfad 42 zu empfangen und an den Datenrückleitungspfad 44 zu senden. Die von einem Sicherheitsteilnehmer 22 erzeugten und über den Datenrückleitungspfad 44 gesendeten Daten umfassen vorzugsweise von dem jeweiligen Sicherheitsteilnehmer 22 erzeugte Diagnose- und/oder Statusinformationen. Insbesondere können diese Informationen den sicherheitsrelevanten Schaltzustand des jeweiligen Schutzgeräts 24 wiedergeben, der auch für die Unterbrechung des Testsignalpfads ausschlaggebend ist, d.h. den von dem Schutzgerät 24 eingenommenen Zustand "sicher" oder "nicht sicher". Dadurch wird es der Sicherheitssteuerung 10 ermöglicht, im Fall einer Auslösung einer Sicherheitsabschaltung festzustellen, durch welchen Sicherheitsteilnehmer 22 die Abschaltung verursacht wurde.

Die Anschaltungsmodule 26 weisen jeweils eine über einen Signalpfad 54 (siehe zweiter Sicherheitsteilnehmer 22 von links in Fig.2) mit der Logikeinheit 50 verbundene, insbesondere binäre, Ein-/Ausgabeschnittstelle 68 auf, die über wenigstens eine in der Anschaltungsleitung 30 vorgesehene Signalader 70 mit einer, insbesondere binären und/oder nicht sicheren Ein-/Ausgabe-Schnittstelle 68 des Schutzgeräts 24 verbunden ist, um über den Datenrückleitungspfad 44 empfangene Daten an das Schutzgerät 24 zu übertragen und/oder um von dem Schutzgerät 24 erzeugte Daten über den Datenrückleitungspfad 44 an die Sicherheitssteuerung 10 zu senden.

Die mit dem Ausgangssignal der Sicherheitssteuerung 10 ausgesendeten Ausgangsdaten werden von dem Abschlusselement 32 und den Sicherheitsteilnehmem 22 empfangen und können beispielsweise Steuerungsdaten zur Ansteuerung von Funktionen der Sicherheitsteilnehmer 22 bzw. deren Schutzgeräte 24 umfassen wie z.B. eine Anforderung eines Zuhaltefunktion eines als Zuhaltungsvorrichtung einer Schutztür ausgebildeten Schutzgeräts 24.

Der an den Ausgang X1 angeschlossene Hinleitungspfad 38 des Testsignalpfads 36 bildet mit dem an den Eingang I2 angeschlossenen Datenrückleitungspfad 44 einen als Ringbus ausgebildeten ringförmigen Datenpfad 42, über den die Sicherheitssteuerung 10, das Abschlusselement 32 und die Sicherheitsteilnehmer 22 miteinander kommunizieren und zwar nach Art einer nachstehend beschriebenen Daisy-Chain-Buskommunikation. Die Sicherheitssteuerung 10, das Abschlusselement 32 und die Sicherheitsteilnehmer 22 bilden dabei die Teilnehmer der Buskommunikation, wobei die Sicherheitssteuerung 10 gleichzeitig den Busmaster darstellt.

Die Sicherheitssteuerung 10 sendet an ihrem Ausgang X1 das die von der Sicherheitssteuerung 10 erzeugten Ausgangsdaten enthaltende Ausgangssignal an den Hinleitungspfad 38 aus und empfängt an ihrem Eingang 12 das über den Rückleitungspfad 44 des Datenpfads 42 übertragene Datensignal, welches die von den Sicherheitsteilnehmern 22 und/oder dem Abschlusselement 32 erzeugten Daten enthält, die von der Sicherheitssteuerung 10 empfangen und ausgewertet werden. Um Daten von dem Datenpfad 42 zu empfangen und Daten über den Datenpfad 42 zu senden, ist jeder Teilnehmer 22, 32 dazu ausgebildet, an einem Eingang ein über den Datenpfad 42 übertragenes eingehendes Datensignal zu empfangen, die empfangenen Daten zu verarbeiten, und, bevorzugt gleichzeitig, an einem von dem Eingang verschiedenen Ausgang ein ausgehendes Datensignal an den Datenpfad 42 auszusenden, so dass die Teilnehmer 22, 32 eine Nachrichtenkette bilden, in der die Daten in einer vorgegebenen Datenflussrichtung von einem Teilnehmer 22, 32 zum nächsten übertragen werden. Die Logikeinheiten 50, 56 der Sicherheitsteilnehmer 22 und des Abschlusselements 32 dienen dabei als Sende- und Empfangsschaltung, über die der jeweilige Teilnehmer 22, 32 Daten empfängt und sendet.

Das in Fig. 2 gezeigte Sicherheitssystem ist in Bezug auf seine Stromversorgung in der vorstehend unter Bezugnahme auf Fig. 1 beschriebenen Weise in zwei Segmente A und B aufgeteilt, die jeweils mehrere, im vorliegenden Ausführungsbeispiel durch die Sicherheitsteilnehmer 22, das Abschlusselement 32 und das Einspeisemodul 140b gebildete Verbraucher 138a, 138b von elektrischer Leistung umfassen. Die Verbraucher 138b des Segments B sind durch das Einspeisemodul 140b, die zwei in Fig. 2 rechts dargestellten Sicherheitsteilnehmer 22 und das Abschlusselement 32 gebildet.

Die Verbraucher 138a des Segments A sind durch zwei in Fig. 2 links dargestellte Sicherheitsteilnehmer 22 gebildet, wobei der unmittelbar mit der Sicherheitssteuerung 10 verbundene linke Sicherheitsteilnehmer 22 des Segments A direkt ohne Zwischenschaltung eines Einspeisemoduls 140b mit der Stromversorgungseinheit 16a verbunden ist.

Die Bussignalpfade, d.h. der Hinleitungspfad 38 und der Rückleitungspfad 40 des Testsignalpfads 36 sowie der Datenrückleitungspfad 44 sind jeweils in zwei Abschnitte unterteilt, wobei jeder Abschnitt jeweils einem Segment A, B zugeordnet und mit den Verbrauchern 138a, 138b des jeweiligen Segments A, B elektrisch leitfähig verbunden ist. Die getrennten Abschnitte der Bussignalpfade 38, 40, 44 sind jeweils durch eine in dem Einspeisemodul 140b angeordnete Kopplungseinheit 142 nicht-galvanisch, insbesondere optisch, induktiv oder kapazitiv, miteinander gekoppelt. Dabei ist eine galvanische Trennung und gleichzeitig eine durchgehende signalübertragende Verbindung zwischen den den verschiedenen Segmenten A, B zugeordneten Abschnitten der Bussignalpfade 38, 40, 44 realisiert. Jede Kopplungseinheit 142 kann beispielsweise eine kombinierte Sende- und Empfangseinheit umfassen, die dem Segment A zugeordnet ist und mit dem dem Segment A zugeordneten Abschnitt des jeweiligen Bussignalpfads 38, 40, 44 elektrisch leitfähig verbunden ist, sowie eine dem Segment B zugeordnete Sende- und Empfangseinheit, die mit dem dem Segment B zugeordneten Abschnitt des jeweiligen Bussignalpfads 38, 40, 44 elektrisch leitfähig verbunden ist. Diese Sende- und Empfangseinheiten gewährleisten die nicht-galvanische Signalübertragung zwischen den Abschnitten der Bussignalpfade 38, 40, 44. Anstelle von kombinierten Sende- und Empfangseinheiten können auch reine Sende- bzw. Empfangseinheiten verwendet werden, die der Signalflussrichtung auf dem jeweiligen Bussignalpfad 38, 40, 44 entsprechend ausgewählt und einem Segment A, B zugeordnet sind. Bevorzugt wird jede einem Segment A, B zugeordnete Sende- oder Empfangseinheit oder kombinierte Sende- und Empfangseinheit über diejenige Stromversorgungseinheit 16a, 16b und diejenigen Stromversorgungsleitungen 46a, 46b, 48a, 48b mit Strom versorgt, die demselben Segment A, B zugeordnet sind, wobei die vorstehend beschriebene galvanische Trennung der Stromversorgungsleitungen 46a, 46b, 48a, 48b aufrecht erhalten bleibt. Die entsprechenden Verbindungen zur Stromversorgung der Kopplungseinheiten 142 mit den Stromversorgungsleitungen 46a, 46b, 48a, 48b sind in Fig. 2 nicht eigens dargestellt.

Durch die Segmentierung des Sicherheitssystems in Bezug auf die Energieversorgung und durch die galvanische Trennung der Stromversorgungsleitungen 46a, 46b, 48a, 48b und der Abschnitte der Bussignalpfade 38, 40, 44 zwischen den Segmenten A, B wird die elektromagnetische Verträglichkeit (EMV) des Sicherheitssystems erheblich gesteigert. Außerdem wird die Strombelastung, für die die Komponenten des Sicherheitssystems einschließlich der Verbraucher 138a, 138b ausgelegt sein müssen, reduziert.

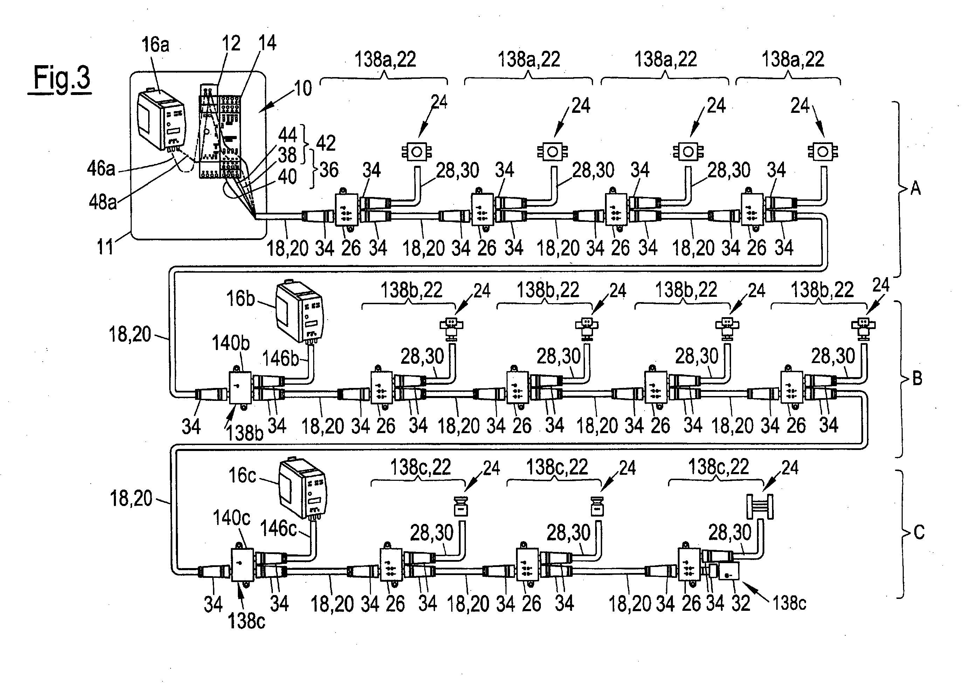

Fig. 3 zeigt ein weiteres Bussystem, welches im Wesentlichen dem in Fig. 2 gezeigten Bussystem entspricht, aber hier drei galvanisch voneinander getrennte Segmente A, B, C mit jeweils mehreren Verbrauchern 138a, 138b, 138c umfasst, die über eine Busleitung 18 in einer Linie miteinander verbunden sind. Es ist aber auch möglich, mehr als drei galvanisch voneinander getrennte Segmente A, B, C vorzusehen.

Die in einem Schaltschrank 11 angeordnete Sicherheitssteuerung 10 weist ein Hauptmodul 12 und ein Ein-/Ausgangsmodul 14 auf, wobei das Hauptmodul 12 unmittelbar mit der dem Segment A zugeordneten Stromversorgungseinheit 16a verbunden ist, über die die Sicherheitssteuerung 10 mit Strom versorgt wird, so dass in diesem Ausführungsbeispiel auch die Sicherheitssteuerung 10 einen Verbraucher des Segments A des Bussystems darstellt. Die Stromversorgungsleitungen 46a, 48a zwischen der Stromversorgungseinheit 16a und der Sicherheitssteuerung 10 sind hier als getrennte Leitungen dargestellt, können aber bevorzugt in einem gemeinsamen Kabel 146a, 146b (Fig. 1 und 2) angeordnet sein.

Die übrigen Segmente B, C sind über dem jeweiligen Segment B, C zugeordnete Einspeisemodule 140b, 140c mit der jeweils zugeordneten Stromversorgungseinheit 16b, 16c verbunden, wobei die Einspeisemodule 140b, 140c jeweils an dem anfangsseitigen Ende einer durch die Verbraucher 138b, 138c des jeweiligen Segments B, C zusammen mit der Busleitung 18 gebildeten Linie angeordnet sind und die beschriebene galvanische Trennung zwischen den Segmenten A, B, C realisieren.

Die Verbraucher 138a des Segments A sind mit Ausnahme der Sicherheitssteuerung 10 jeweils durch einen Sicherheitsteilnehmer 22 gebildet, wobei die Schutzgeräte 24 der Sicherheitsteilnehmer 22 des Segments A in dem vorliegenden Ausführungsbeispiel jeweils durch einen in Fig. 3 symbolisch dargestellten Not-Aus-Taster gebildet sind. Die Verbraucher 138b des Segments B sind mit Ausnahme des Einspeisemoduls 140b jeweils durch einen Sicherheitsteilnehmer 22 gebildet, wobei die Schutzgeräte 24 der Sicherheitsteilnehmer 22 des Segments B in dem vorliegenden Ausführungsbeispiel jeweils durch eine in Fig. 3 symbolisch dargestellte Zuhaltungsvorrichtung für eine Sicherheitstür gebildet sind. Die Verbraucher 138c des Segments C sind mit Ausnahme des Einspeisemoduls 140c und des Abschlusselements 32 jeweils durch einen Sicherheitsteilnehmer 22 gebildet, wobei die Schutzgeräte 24 der zwei in Fig. 3 links dargestellten Sicherheitsteilnehmer 22 des Segments C jeweils durch einen in Fig. 3 symbolisch dargestellten Laserscanner gebildet sind, welcher z.B. einen OSSD-Ausgang umfassen kann, und wobei das Schutzgerät 24 des in Fig. 3 rechts dargestellten Sicherheitsteilnehmers 22 des Segments C durch einen Lichtvorhang bzw. ein Lichtgitter gebildet ist.

### Bezußszeichenliste

- 10: Sicherheitssteuerung
- 11: Schaltschrank
- 12: Hauptmodul
- 14: Ein-/Ausgangsmodul
- 16a, 16b, 16c: Stromversorgungseinheit
- 18: Busleitung
- 20: Buskabel
- 22: Sicherheitsteilnehmer
- 24: Schutzgerät
- 26: Anschaltungsmodul
- 28: Anschaltungskabel
- 30: Anschaltungsleitung
- 32: Abschlusselement
- 34: Steckverbindung
- 35a, 35b: Bussignalpfadabschnitt
- 36: Bussignalpfad, Testsignalpfad
- 38: Bussignalpfad, Hinleitungspfad
- 40: Bussignalpfad, Rückleitungspfad
- 42: Datenpfad
- 44: Datenrückleitungspfad
- 46a, 46b: erste Stromversorgungsleitung
- 48a, 48b: zweite Stromversorgungsleitung
- 50: Logikeinheit, Auswerteeinheit
- 54: Signalpfad
- 56: Logikeinheit
- 62: Testschaltung
- 64: Verbindung
- 68: Ein-/Ausgabeschnittstelle
- 70: Signalader
- 134a, 134b: erster Anschluss
- 136a, 136b: zweiter Anschluss
- 138a, 138b, 138c: Verbraucher
- 140b, 140c: Einspeisemodul
- 142: Kopplungseinheit
- 146a, 146b, 146c: Kabel
- 148a, 148b: elektrische Sicherung
- A, B, C: Segment
- I1: Sicherheitseingang
- I2: Eingang
- X1: Ausgang

## Patentansprüche

1. Als Sicherheitssystem ausgebildetes Bussystem mit
- einer Busleitung (18),
- mehreren Verbrauchern (138a, 138b, 138c) von elektrischer Leistung, die über die Busleitung (18) miteinander verbunden sind, sowie mit
- mehreren separaten elektrischen Stromversorgungseinheiten (16a, 16b, 16c), die jeweils eine elektrische Spannung zur Stromversorgung wenigstens eines Verbrauchers (138a, 138b, 138c) bereitstellen,
wobei das Bussystem in Segmente (A, B, C) mit jeweils einem oder mehreren Verbrauchern (138a, 138b, 138c) unterteilt ist, denen jeweils eine Stromversorgungseinheit (16a, 16b, 16c) zugeordnet ist und die jeweils eine erste Stromversorgungsleitung (46a, 46b) und eine zweite Stromversorgungsleitung (48a, 48b) aufweisen, über die die ein oder mehreren Verbraucher (138a, 138b, 138c) des jeweiligen Segments (A, B, C) mit der zugeordneten Stromversorgungseinheit (16a, 16b, 16c) elektrisch leitfähig verbunden sind und zwischen denen die elektrische Spannung der zugeordneten Stromversorgungseinheit (16a, 16b, 16c) bereitgestellt ist,
wobei die erste Stromversorgungsleitung (46a, 46b) und die zweite Stromversorgungsleitung (48a, 48b) eines Segments (A, B, C) jeweils nicht unmittelbar mit der ersten Stromversorgungsleitung (46a, 46b) und der zweiten Stromversorgungsleitung (48a, 48b) eines anderen Segments (A, B, C) elektrisch leitfähig verbunden sind und vorzugsweise von der ersten Stromversorgungsleitung (46a, 46b) und der zweiten Stromversorgungsleitung (48a, 48b) des anderen Segments (A, B, C) galvanisch getrennt sind,
wobei das Bussystem umfasst:
- eine Sicherheitssteuerung (10) mit einem Ausgang (X1) und einem Sicherheitseingang (I1), die an die Busleitung (18) des Bussystems angeschlossen sind,
- mehrere an die Busleitung (18) angeschlossene Sicherheitsteilnehmer (22), die jeweils ein Schutzgerät (24) umfassen,
wobei die Busleitung (18) und die an die Busleitung (18) angeschlossenen Sicherheitsteilnehmer (22) einen Testsignalpfad (36) mit einem mit dem Ausgang (X1) der Sicherheitssteuerung (10) verbundenen Hinleitungspfad (38) und einem mit dem Sicherheitseingang (I1) der Sicherheitssteuerung (10) verbundenen Rückleitungspfad (40) bilden, **dadurch gekennzeichnet dass**
die Sicherheitsteilnehmer (22) derart eingerichtet sind, dass das Vorliegen eines nicht sicheren Zustandes des zugeordneten Schutzgeräts (24) eine Unterbrechung des Testsignalpfads (36) bewirkt, und
wobei die Sicherheitssteuerung (10) dazu ausgebildet ist, an dem mit dem Hinleitungspfad (38) verbundenen Ausgang (X1) ein Ausgangssignal auszusenden.

2. Bussystem nach Anspruch 1,
**dadurch gekennzeichnet, dass**
das Bussystem wenigstens einen zumindest abschnittsweise in der Busleitung (18) angeordneten Bussignalpfad (35a, 35b; 38, 40, 44) umfasst, über den die Verbraucher (138a, 138b, 138c) miteinander verbunden sind.

3. Bussystem nach Anspruch 2,
**dadurch gekennzeichnet , dass**
der wenigstens eine Bussignalpfad (35a, 35b; 38, 40, 44) mehrere Abschnitte aufweist, die zur Signalübertragung durch wenigstens eine Kopplungseinheit (142) nicht-galvanisch, insbesondere optisch, induktiv oder kapazitiv, miteinander gekoppelt sind.

4. Bussystem nach Anspruch 2 oder 3,
**dadurch gekennzeichnet, dass**
zwei Abschnitte des wenigstens einen Bussignalpfads (35a, 35b; 38, 40, 44) unterschiedlichen Segmenten (A, B, C) des Bussystems zugeordnet sind und mit den Verbrauchern (138a, 138b, 138c) des jeweils zugeordneten Segments (A, B, C) elektrisch leitfähig verbunden sind.

5. Bussystem nach zumindest einem der vorstehenden Ansprüche,
**dadurch gekennzeichnet, dass**
die erste und/oder zweite Stromversorgungsleitung (46a, 48a, 46b, 48b) zumindest eines Segments (A, B, C) zumindest abschnittsweise in der Busleitung (18) angeordnet ist, wobei die erste und/oder zweite Stromversorgungsleitung (46a, 48a, 46b, 48b) des Segments (A, B, C) vorzugsweise zumindest abschnittsweise zusammen mit einem Abschnitt eines Bussignalpfads (35a, 35b; 38, 40, 44) des Bussystems in einem gemeinsamen Buskabel (20) angeordnet ist.

6. Bussystem nach zumindest einem der vorstehenden Ansprüche,
**dadurch gekennzeichnet , dass**
die Verbraucher (138a, 138b, 138c) eines Segments (A, B, C) ausgehend von der dem Segment (A, B, C) zugeordneten Stromversorgungseinheit (16a, 16b, 16c) über die erste und/oder zweite Stromversorgungsleitung (46a, 48a, 46b, 48b) des Segments (A, B, C) in einer Reihe hintereinander an die dem Segment (A, B, C) zugeordnete Stromversorgungseinheit (16a, 16b, 16c) angeschlossen sind.

7. Bussystem nach zumindest einem der vorstehenden Ansprüche,
**dadurch gekennzeichnet, dass**
das Bussystem wenigstens ein Einspeisemodul (140b, 140c) umfasst, das einem Segment (B, C) des Bussystems zugeordnet ist und über das die zugeordnete Stromversorgungseinheit (16b, 16c) zur Bereitstellung der elektrischen Spannung mit einem oder mehreren Verbrauchern (138b, 138c) dieses Segments (B, C) des Bussystems verbunden ist.

8. Bussystem nach Anspruch 7,
**dadurch gekennzeichnet, dass**
das Einspeisemodul (140b, 140c) sowohl mit der ersten und der zweiten Stromversorgungsleitung (46b, 48b) des dem Einspeisemodul (140b, 140c) zugeordneten Segments (B, C) des Bussystems als auch mit der ersten und der zweiten Stromversorgungsleitung (46a, 48a) eines benachbarten Segments (A, B, C) des Bussystems verbunden ist und die ersten und zweiten Stromversorgungsleitungen (46a, 48a, 46b, 48b) beider Segmente (A, B, C) in dem Einspeisemodul (140b, 140c) galvanisch voneinander getrennt sind.

9. Bussystem nach Anspruch 7 oder 8,
**dadurch gekennzeichnet, dass**
das Einspeisemodul (140b, 140c) wenigstens eine Kopplungseinheit (142) zur signalübertragenden nicht-galvanischen Kopplung zweier mit dem Einspeisemodul (140b, 140c) verbundener Abschnitte eines Bussignalpfads (35a, 35b; 38, 40, 44) aufweist, wobei ein Abschnitt des Bussignalpfads (35a, 35b; 38, 40, 44) mit den Verbrauchern (138b, 138c) des dem Einspeisemodul (140b, 140c) zugeordneten Segments (B, C) des Bussystems elektrisch leitfähig verbunden ist und der andere Abschnitt mit den Verbrauchern (138a, 138b, 138c) eines dazu benachbarten Segments (A, B, C) elektrisch leitfähig verbunden ist.

10. Bussystem nach zumindest einem der vorstehenden Ansprüche,
**dadurch gekennzeichnet, dass**
das Bussystem wenigstens eine in der ersten und/oder zweiten Stromversorgungsleitung (46a, 48a, 46b, 48b) eines Segments (A, B, C) angeordnete elektrische Sicherung (148a, 148b) umfasst, vorzugsweise eine strombegrenzende elektrische Sicherung.

11. Bussystem nach einem der Ansprüche 1 bis 10,
**dadurch gekennzeichnet, dass**
die Sicherheitsteilnehmer (22) entlang der Busleitung (18) so in einer Linie angeordnet sind, dass sowohl der Hinleitungspfad (38) als auch der Rückleitungspfad (40) des Testsignalpfads (36) durch dieselben Sicherheitsteilnehmer (22) hindurch verlaufen und dass das Bussystem ein an dem Ende der Linie angeschlossenes, den Hinleitungspfad (38) und den Rückleitungspfad (40) des Testsignalpfads (36) verbindendes Abschlusselement (32) umfasst,
wobei das Abschlusselement (32) dazu ausgebildet ist, das Ausgangssignal von dem Hinleitungspfad (38) zu empfangen und in Abhängigkeit von dem von dem Hinleitungspfad (38) empfangenen Ausgangssignal ein gegenüber dem empfangenen Ausgangssignal verändertes Testsignal an den Rückleitungspfad (40) des Testsignalpfads (36) auszugeben.

12. Einspeisemodul (140b, 140c) zur Anbindung von über eine Busleitung (18) miteinander verbundenen Verbrauchern (138a, 138b, 138c) elektrischer Leistung eines als Sicherheitssystem ausgebildeten Bussystems gemäß einem der Ansprüche 1 bis 11 an eine Stromversorgungseinheit (16b, 16c), wobei das Einspeisemodul folgendes umfasst:
- ein erstes Steckverbindungselement (34) mit einem ersten und einem zweiten Anschluss zur Verbindung mit jeweils einem versorgungsseitigen Abschnitt einer ersten und zweiten Stromversorgungsleitung (46b, 48b) eines dem Einspeisemodul (140b, 140c) zugeordneten Segments (B, C) des Bussystems und einer damit verbundenen Stromversorgungseinheit (16b, 16c),
- ein zweites Steckverbindungselement (34) mit einem ersten und einem zweiten Anschluss zur Verbindung mit jeweils einem verbraucherseitigen Abschnitt der ersten und zweiten Stromversorgungsleitung (46b, 48b) und mit wenigstens einem dritten Anschluss zur Verbindung mit einem dem Segment (B, C) zugeordneten Abschnitt wenigstens eines Bussignalpfads (35a, 35b; 38, 40, 44),
wobei die ersten und zweiten Anschlüsse des ersten und zweiten Steckverbindungselements (34) elektrisch leitfähig miteinander verbunden sind,
- ein drittes Steckverbindungselement (34) mit einem ersten und einem zweiten Anschluss zur Verbindung mit jeweils einem Abschnitt einer ersten und zweiten Stromversorgungsleitung (46a, 48a) eines benachbarten Segments (A, B, C) des Bussystems und mit wenigstens einem dritten Anschluss zur Verbindung mit einem dem benachbarten Segment (A, B, C) des Bussystems zugeordneten Abschnitt des wenigstens einen Bussignalpfads (35a, 35b; 38, 40, 44), wobei der erste und der zweite Anschluss des dritten Steckverbindungselements (34) jeweils von den ersten und den zweiten Anschlüssen des ersten und zweiten Steckverbindungselements (34) galvanisch getrennt sind, und ferner umfassend
- wenigstens eine Kopplungseinheit (142) zur signalübertragenden nicht-galvanischen Kopplung des wenigstens einen dritten Anschlusses des zweiten Steckverbindungselements (34) mit dem wenigstens einen dritten Anschluss des dritten Steckverbindungselements (34).

## Claims

1. A bus system configured as a safety system which comprises
- a bus line (18);
- a plurality of consumers (138a, 138b, 138c) of electrical power which are connected to one another via the bus line (18); as well as comprising
- a plurality of separate electrical supply units (16a, 16b, 16c) which respectively provide an electric voltage for the current supply of at least one consumer (138a, 138b, 138c),
wherein the bus system is divided into segments (A, B, C) each having one or more consumers (138a, 138b, 138c) with each segment having a respectively associated current supply unit (16a, 16b, 16c) and each segment having a first current supply line (46a, 46b) and a second current supply line (48a, 48b) via which the one or more consumers (138a, 138b, 138c) of the respective segment (A, B, C) are electrically conductively connected to the associated current supply units (16a, 16b, 16c) and between which the electric voltage of the associated current supply unit (16a, 16b, 16c) is supplied; wherein the first current supply line (46a, 46b) and the second current supply line (48a, 48b) of a segment (A, B, C) are each not directly electrically conductively connected to the first current supply line (46a, 46b) and to the second current supply line (48a, 48b) of a different segment (A, B, C) and are preferably separated from the first current supply line (46a, 46b) and from the second current supply line (48a, 48b) of the other segment (A, B, C) in a galvanic manner,
wherein the bus system comprises
- a safety control (10) having an output (X1) and a safety input (I1) which are connected to the bus line (18) of the bus system,
- a plurality of safety related participants (22) connected to the bus line (18), said safety related participants each including a protective device (24);
wherein the bus line (18) and the safety related participants (22) connected to the bus line (18) form a test signal path (36) having a forward path (38) connected to the output (X1) of the safety control (10) and a return path (40) connected to the safety input (I1) of the safety control (10);
**characterized in that**
the safety related participants (22) are configured in such a way that the presence of a non-secure state of the associated protective device (24) brings about an interruption of the test signal path (36); wherein the safety control (10) is configured to transmit an output signal at the output (X1) connected to the forward path (38).

2. A bus system in accordance with claim 1,
**characterized in that**
the bus system comprises at least one further bus signal path (35a, 35b; 38, 40, 44) at least sectionally arranged in the bus line (18) via which bus signal path the consumers (138a, 138b, 138c) are connected to one another.

3. A bus system in accordance with claim 2,
**characterized in that**
the at least one bus signal path (35a, 35b; 38, 40, 44) comprises a plurality of sections which are coupled to one another for the signal transmission by means of at least one coupling unit (142) in a non-galvanic manner, in particular are coupled to one another optically, inductively or capacitively.

4. A bus system in accordance with claim 2 or claim 3,
**characterized in that**
two sections of the at least one bus signal path (35a, 35b; 38, 40, 44) are associated with different segments (A, B, C) of the bus system and are electrically conductively connected to the consumers (138a, 138b, 138c) of the respectively associated segment (A, B, C).

5. A bus system in accordance with at least one of the preceding claims,
**characterized in that**
the first and/or the second current supply line (46a, 48a, 46b, 48b) of at least one segment (A, B, C) is at least sectionally arranged in the bus line (18), wherein the first and/or the second current supply line (46a, 48a, 46b, 48b) of the segment (A, B, C) is arranged preferably at least sectionally together with a section of a bus signal path (35a, 35b; 38, 40, 44) of the bus system in a common bus cable (20).

6. A bus system in accordance with at least one of the preceding claims,
**characterized in that**
starting from the current supply unit (16a, 16b, 16c) associated with the segment (A, B, C), the consumers (138a, 138b, 138c) of one segment (A, B, C) are connected in a row one after the other to the current supply unit (16a, 16b, 16c) associated with the segment (A, B, C) via the first and/or the second current supply line (46a, 48a, 46b, 48b) of the segment (A, B, C).

7. A bus system in accordance with at least one of the preceding claims,
**characterized in that**
the bus system comprises at least one feed module (140b, 140c) which is associated with a segment (B, C) of the bus system and via which the associated current supply unit (16b, 16c) is connected to one or more consumers (138b, 138c) of this segment (B, C) of the bus system for the supply of the electric voltage.

8. A bus system in accordance with claim 7,
**characterized in that**
the feed module (140b, 140c) is connected both to the first and to the second current supply line (46b, 48b) of the segment (B, C) of the bus system associated with the feed module (140b, 140c) and to the first and to the second current supply lines (46a, 48a) of an adjacent segment (A, B, C) of the bus system and the first and the second current supply lines (46a, 48a, 46b, 48b) of the two segments (A, B, C) are separated from one another in a galvanic manner in the feed module (140b, 140c).

9. A bus system in accordance with claim 7 or claim 8,
**characterized in that**
the feed module (140b, 140c) has at least one coupling unit (142) for the signal transmitting non-galvanic coupling of two sections of a bus signal path (35a, 35b; 38, 40, 44) connected to the feed module (140b, 140c), wherein a section of the bus signal path (35a, 35b; 38, 40, 44) is electrically conductively connected to the consumers (138b, 138c) of the segment (B, C) of the bus system associated with the feed module (140b, 140c) and the other section is electrically conductively connected to the consumers (138a, 138b, 138c) of a segment (A, B, C) adjacent thereto.

10. A bus system in accordance with at least one of the preceding claims,
**characterized in that**
the bus system comprises at least one electrical fuse (148a, 148b), preferably a current limiting electrical fuse, arranged in the first and/or the second current supply line (46a, 48a, 46b, 48b) of a segment (A, B, C).

11. A bus system in accordance with one of the claims 1 to 10,
**characterized in that**
the safety related participants (22) are arranged along the bus line (18) in a line in such a way that both the forward path (38) and the return path (40) of the test signal path (36) run through the same safety related participants (22); and
**in that** the bus system comprises a termination element (32) which is connected at the end of the line and which connects the forward path (38) and the return path (40) of the test signal path (36); wherein the termination element (32) is configured to receive the output signal from the forward path (38) and to output a test signal to the return path (40) of the test signal path (36), said test signal being changed with respect to the received output signal in dependence on the output signal received from the forward path (38).

12. A feed module (140b, 140c) for the connection of consumers (138a, 138b, 138c) of electrical power of a bus system connected to one another via a bus line (18) to a current supply unit (16b, 16c), the bus system being configured as a safety system in accordance with any one of the claims 1 to 11, wherein the feed module comprises the following
- a first plug connection element (34) having a first and a second connection for the connection respectively to a supply side section of a first and a second current supply line (46b, 48b) of a segment (B, C) of the bus system associated with the feed module (140b, 140c) and a current supply unit (16b, 16c) connected thereto;
- a second plug connection element (34) having a first and a second connection for the connection respectively to a consumer side section of the first and the second current supply line (46b, 48b) and to at least a third connection for the connection to a section of at least one bus signal path (35a, 35b; 38, 40, 44) associated with the segment (B, C);
wherein the first and the second connections of the first and the second plug connection element (34) are connected to one another in an electrically conductive manner;
- a third plug connection element (34) having a first and a second connection for the connection to a respective first and second current supply line (46a, 48a) of an adjacent segment (A, B, C) of the bus system and to at least one third connection for the connection to at least one bus signal path (35a, 35b; 38, 40, 44) associated with the adjacent segment (A, B, C) of the bus system;
wherein the first and the second connections of the third plug connection element (34) are respectively separated from the first and the second connections of the first and the second plug connection elements (34) in a galvanic manner; and further comprising
- at least one coupling unit (142) for the signal transmitting non-galvanic coupling of the at least one third connection of the second plug connection element (34) to the at least one third connection of the third plug connection element (34).

## Revendications

1. Système de bus réalisé à titre de système de sécurité, comprenant
- une ligne de bus (18),
- plusieurs consommateurs (138a, 138b, 138c) de puissance électrique, qui sont reliés les uns aux autres via la ligne de bus (18), et comprenant
- plusieurs unités d'alimentation électrique séparées (16a, 16b, 16c), qui préparent chacune une tension électrique pour l'alimentation d'au moins un consommateur (138a, 138b, 138c),
dans lequel le système de bus est subdivisé en segments (A, B, C) avec chacun un ou plusieurs consommateurs (138a, 138b, 138c) auxquels une unité d'alimentation électrique respective (16a, 16b, 16c) est associée et qui comprennent chacun une première ligne d'alimentation électrique (46a, 46b) et une seconde ligne d'alimentation électrique (48a, 48b) via lesquelles lesdits un ou plusieurs consommateurs (138a, 138b, 138c) du segment respectif (A, B, C) sont reliés à l'unité d'alimentation électrique (16a, 16b, 16c) de manière à conduire l'électricité et entre lesquels est préparée la tension électrique de l'unité d'alimentation électrique (16a, 16b, 16c) associée,
dans lequel la première ligne d'alimentation électrique (46a, 46b) et la seconde ligne d'alimentation électrique (48a, 48b) d'un segment (A, B, C) ne sont pas reliées respectivement directement avec la première ligne d'alimentation électrique (46a, 46b) et avec la seconde ligne d'alimentation électrique (48a, 48b) d'un autre segment (A, B, C) de manière à conduire l'électricité et sont de préférence séparées sur le plan galvanique de la première ligne d'alimentation électrique (46a, 46b) et de la seconde ligne d'alimentation électrique (48a, 48b) de l'autre segment (A, B, C),
dans lequel le système de bus inclut :
- une commande de sécurité (10) avec une sortie (X1) et une entrée de sécurité (I1), qui sont branchées à la ligne de bus (18) du système de bus,
- plusieurs participants de sécurité (22) branchés à la ligne de bus (18), qui incluent chacun un appareil de protection (24),
dans lequel la ligne de bus (18) et le participant de sécurité (22) branché à la ligne de bus (18) forment un trajet de signal test (36) avec un trajet de ligne arrivante (38) raccordé à la sortie (X1) de la commande de sécurité (10) et un trajet de ligne de retour (40) raccordé à l'entrée de sécurité (I1) de la commande de sécurité (10),
**caractérisé en ce que** les participants de sécurité (22) sont conçus de telle façon que la présence d'un état non sécurisé de l'appareil de protection associé (24) provoque une interruption du trajet de signal test (36), et
dans lequel la commande de sécurité (10) est réalisée pour émettre un signal de sortie à la sortie (X1) reliée au trajet de ligne arrivante (38).

2. Système de bus selon la revendication 1,
**caractérisé en ce que** le système de bus comprend au moins un trajet de signal de bus (35a, 35b ; 38, 40, 44), agencé au moins par tronçons dans la ligne de bus (18), trajet via lequel les consommateurs (138a, 138b, 138c) sont reliés les uns aux autres.

3. Système de bus selon la revendication 2,
**caractérisé en ce que** ledit au moins un trajet de signal de bus (35a, 35b ; 38, 40, 44) comprend plusieurs tronçons qui sont couplés les uns aux autres par au moins une unité de couplage (142) pour la transmission d'un signal, d'une manière qui n'est pas galvanique, en particulier optique, inductive ou capacitive.

4. Système de bus selon la revendication 2 ou 3,
**caractérisé en ce que** de tronçons dudit au moins un trajet de signal de bus (35a, 35b ; 38, 40, 44) sont associés à des segments différents (A, B, C) du système de bus, et sont raccordés de manière électriquement conductrice avec les consommateurs (138a, 138b, 138c) du segment respectivement associé (A, B, C).

5. Système de bus selon l'une au moins des revendications précédentes,
**caractérisé en ce que** la première et/ou la seconde ligne d'alimentation électrique (46a, 48a, 46b, 48b) d'au moins un segment (A, B, C) est agencée au moins par tronçons dans la ligne de bus (18), dans lequel la première et/ou la seconde ligne d'alimentation électrique (46a, 48a, 46b, 48b) du segment (A, B, C) et agencée, de préférence au moins par tronçons, dans un câble de bus commun (20) ensemble avec un tronçon d'un trajet de signal de bus (35a, 35b ; 38, 40, 44) du système de bus.

6. Système de bus selon l'une au moins des revendications précédentes,
**caractérisé en ce que** les consommateurs (138a, 138b, 138c) d'un segment (A, B, C), en partant de l'unité d'alimentation électrique (16a, 16b, 16c) associée au segment (A, B, C), sont branchées via la première et/ou la seconde ligne d'alimentation électrique (46a, 48a, 46b, 48b) du segment (A, B, C) en série les uns derrière les autres à l'unité d'alimentation électrique (16a, 16b, 16c) associée au segment (A, B, C).

7. Système de bus selon l'une au moins des revendications précédentes, **caractérisé en ce que** le système de bus comprend au moins un module d'injection (140b, 140c), qui est associé à un segment (B, C) du système de bus et via lequel l'unité d'alimentation électrique associée (16b, 16c) est raccordée, pour la préparation de la tension électrique, à un ou plusieurs consommateurs (138b, 138c) de ce segment (B, C) du système de bus.

8. Système de bus selon la revendication 7,
**caractérisé en ce que** le module d'injection (140b, 140c) est raccordé aussi bien à la première et à la seconde ligne d'alimentation électrique (46b, 48b) du segment (B, C) associé au module d'injection (140b, 140c) du système de bus qu'à la première et à la seconde ligne d'alimentation électrique (46a, 48a) d'un segment voisin (A, B, C) du système de bus, et les premières et les secondes lignes d'alimentation électrique (46a, 48a, 46b, 48b) des deux segments (A, B, C) sont séparées les unes des autres sur le plan galvanique dans le module d'injection (140b, 140c).

9. Système de bus selon la revendication 7 ou 8,
**caractérisé en ce que** le module d'injection (140ab, 140c) comprend au moins une unité de couplage (142) pour le couplage non galvanique en transmission de signal de deux tronçons, raccordée au module d'injection (140b, 140c), d'un trajet de signal de bus (35a, 35b ; 38, 40, 44), dans lequel un tronçon du trajet de signal de bus (35a, 35b ; 38, 40, 44) est raccordé de manière électriquement conductrice avec les consommateurs (138b, 138c) du segment (B, C), associé au module d'injection (140b, 140c), du système de bus, et l'autre tronçon est raccordé de manière électriquement conductrice avec les consommateurs (138a, 138b, 138c) d'un segment (A, B, C) voisin de celui-ci.

10. Système de bus selon l'une au moins des revendications précédentes,
**caractérisé en ce que** le système de bus comprend au moins une protection électrique (148a, 148b) agencée dans la première et/ou la seconde ligne d'alimentation électrique (46a, 48a, 46b, 48b) d'un segment (A, B, C), de préférence une protection électrique limitant le courant.

11. Système de bus selon l'une des revendications 1 à 10,
**caractérisé en ce que** les participants de sécurité (22) sont agencés dans une ligne le long de la ligne de bus (18) de telle façon que le trajet de ligne arrivante (38) tout comme le trajet de ligne de retour (40) du trajet de signal de test (36) passe à travers les mêmes participants de sécurité (22), et **en ce que** le système de bus inclut un élément de terminaison (32) branché à l'extrémité de la ligne et reliant le trajet de ligne arrivante (38) et le trajet de ligne de retour (40) du trajet de signal test (36), dans lequel l'élément de terminaison (32) est réalisé pour recevoir le signal de sortie provenant du trajet de ligne arrivante (38) et, en fonction du signal de sortie reçu depuis le trajet de ligne arrivante (38), pour délivrer un signal test, modifiée par rapport au signal de sortie reçu, vers le trajet de ligne de retour (40) du trajet de signal test (36).

12. Module d'injection (140b, 140c) pour la liaison de consommateurs (138a, 138b, 138c) de puissance électrique, raccordés les uns aux autres via une ligne de bus (18), d'un système de bus réalisé sous forme de système de sécurité, selon l'une des revendications 1 à 11, à une unité d'alimentation électrique (16b, 16c), dans lequel le module d'injection inclut les éléments suivants :
- un premier élément de connexion à enfichage (34) avec une première et une seconde connexion pour la liaison à un tronçon respectif côté alimentation d'une première et d'une seconde ligne d'alimentation électrique (46b, 48b) d'un segment (B, C), associé au module d'injection (140b, 140c), du système de bus, et à une unité d'alimentation électrique (16b, 16c) raccordée à celui-ci,
- un second élément de connexion à enfichage (34) avec une première et une seconde connexion pour la liaison à un tronçon respectif côté consommateur de la première et de la seconde ligne d'alimentation électrique (46b, 48b), et avec au moins une troisième connexion pour la liaison à un tronçon, associé au segment (B, C), d'au moins un trajet de signal de bus (35a, 35b ; 38, 40, 44),
dans lequel les premières et les secondes connexions du premier et du second élément de connexion à enfichage (34) sont reliées les unes aux autres de manière électriquement conductrice,
- un troisième élément de connexion à enfichage (34) avec une première et une seconde connexion pour la liaison à un tronçon respectif d'une première et d'une seconde ligne d'alimentation électrique (46a, 48a) d'un segment voisin (A, B, C) du système de bus et avec au moins une troisième connexion pour la liaison avec un tronçon, associé au tronçon voisin (A, B, C) du système de bus, dudit au moins un trajet de signal de bus (35a, 35b ; 38, 40, 44),
dans lequel la première et la seconde connexion du troisième élément de connexion à enfichage (34) sont respectivement séparées sur le plan galvanique des premières et des secondes connexions du premier et du second élément de connexion à enfichage (34), et comprenant en outre
- au moins une unité de couplage (142) pour le couplage non galvanique en transmission de signal de ladite au moins une troisième connexion du second élément de connexion à enfichage (34) à ladite au moins une troisième connexion du troisième élément de connexion à enfichage (34).
